(19) Europäisches Patentamt
European Patent Office
Office européen des brevets

(11) **EP 2 772 509 B1**

(12) **EUROPEAN PATENT SPECIFICATION**

(45) Date of publication and mention
of the grant of the patent:
**02.01.2019 Bulletin 2019/01**

(21) Application number: **12841440.6**

(22) Date of filing: **21.09.2012**

(51) Int Cl.:
**C08J 9/18** *(2006.01)*          **C08L 101/16** *(2006.01)*

(86) International application number:
**PCT/JP2012/074160**

(87) International publication number:
**WO 2013/058056 (25.04.2013 Gazette 2013/17)**

(54) **METHOD FOR PRODUCING EXPANDED POLYLACTIC ACID RESIN PARTICLE**

VERFAHREN ZUR HERSTELLUNG VON EXPANDIERTEN POLYMILCHSÄUREHARZTEILCHEN

PROCÉDÉ DE PRODUCTION D'UNE PARTICULE DE RÉSINE ACIDE POLYLACTIQUE EXPANSÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2011 JP 2011228625**

(43) Date of publication of application:
**03.09.2014 Bulletin 2014/36**

(73) Proprietor: **JSP Corporation
Chiyoda-ku, Tokyo 100-0005 (JP)**

(72) Inventors:
• **SHINOHARA Mitsuru
Yokkaichi-shi
Mie 510-0881 (JP)**
• **OIKAWA Masaharu
Yokkaichi-shi
Mie 510-0881 (JP)**

(74) Representative: **Mai Dörr Besier
European Patent Attorneys
European Trademark Attorneys
Patentanwälte
Kreuzberger Ring 64
65205 Wiesbaden (DE)**

(56) References cited:
**JP-A- 2003 064 213      JP-A- 2003 064 213
JP-A- 2007 246 610      JP-A- 2007 246 610
JP-A- 2008 231 285      JP-A- 2009 079 202
JP-A- 2009 079 202      JP-A- 2010 111 740**

EP 2 772 509 B1

**Description**

FIELD OF THE INVENTION

The present invention relates to a process for producing polylactic acid-based resin expanded beads and, more specifically, to a process for producing polylactic acid-based resin expanded beads which have excellent in-mold moldability and which are capable of producing an in-mold molded article having excellent mechanical properties.

BACKGROUND ART

In recent years, with an increase of sensitivity to global environment, a polylactic acid-based resin receives attention as a material that is a substitute for general resins produced from the conventional petroleum resources. The polylactic acid-based resin is produced from a plant such as corn as a starting material and is a thermoplastic resin that is regarded as being of a low environmental load type from the standpoint of carbon neutral. Such a polylactic acid-based resin is expected to be used as a plant-derived general resin for foams. Thus studies are being made on foams made of polylactic acid-based resins as a raw material. Among such foams, polylactic acid-based resin expanded beads molded articles can be obtained by in-mold molding in any desired shape without restriction, similar to conventional polystyrene resin expanded beads molded articles. Such molded articles are particularly promising in that they are likely to allow easy design of properties according to the aimed lightness in weight, cushioning property and heat insulating property. With regard to the polylactic acid-based resin expanded beads molded articles, inventions of Patent Documents 1 to 8 have been hitherto made.

PRIOR ART DOCUMENTS

Patent Document:

Patent Document 1: Japanese Kokai Publication No. JP-A-2000-136261
Patent Document 2: Japanese Kokai Publication No. JP-A-2004-83890
Patent Document 3: Japanese Kokai Publication No. JP-A-2006-282750
Patent Document 4: Japanese Kokai Publication No. JP-A-2006-282753
Patent Document 5: Japanese Kokai Publication No. JP-A-2009-62502
Patent Document 6: Japanese Kokai Publication No. JP-A-2007-100025
Patent Document 7: International Publication WO2008/123367
Patent Document 8: Japanese Kokai Publication No. JP-A-2007-169394
D9 = JP 2009 079202 A
D10 = JP 2007 246610 A
D11 = JP 2003 064213 A

SUMMARY OF THE INVENTION

Problems to be Solved by the Invention:

An expanded beads molded article disclosed in Patent Document 1 and obtained by a gas impregnation pre-expansion method is found to have significant variation of the density when portions thereof are compared to each other. Further, fusion bonding between expanded beads and the dimensional stability of the article are not sufficient, and mechanical properties thereof are not satisfactory.

Polylactic acid-based resin expanded beads obtained by the gas impregnation pre-expansion method and disclosed in Patent Documents 2 to 4 show an improvement in fusion bonding property between the expanded beads and in secondary expandability during in-mold molding stage. There is, however, a room for further improvement in fusion bonding property in view of the fact that, when a molded article having a complicated shape is intended to be obtained, the fusion bonding between the expanded beads is occasionally not sufficient and that, when the molded article having a large thickness is intended to be obtained, the fusion bonding between the expanded beads in a center part of the molded article is not sufficient.

Expanded beads obtained by the gas impregnation pre-expansion method disclosed in Patent Document 5 have good fusion bonding property between the expanded beads and permit the production of molded articles having a large thickness or a complicated shape. However, the expanded beads have a problem in production efficiency because it is necessary to control the degree of crystallinity thereof and, therefore, to severely control the temperature, etc. in order to obtain good fusion bonding property between the expanded beads.

The expanded beads obtained by the method of Patent Document 6, in which a foamed extrudate of a polylactic acid-based resin is cut into particles, are capable of affording a polylactic acid-based resin expanded beads molded article having excellent heat resistance and mechanical strengths. However, because a polylactic acid-based resin having a relatively high degree of crystallinity is used for the purpose of improving heat resistance, the degree of crystallinity of the polylactic acid resin from which the expanded beads are formed is liable to become high. Therefore, the expanded beads have a problem with respect to stable production of molded articles having good fusion bonding property.

The expanded beads obtained by an extrusion foaming method of Patent Document 7 have a problem that the density thereof is high since it is necessary to rapidly cool the expanded beads immediately after having been obtained by extrusion molding in order to ensure good in-mold moldability thereof.

In the extrusion foaming method of Patent Document 8, polylactic acid and an acrylic-styrene based compound are fed to an extruder to obtain a foamed extrudate, which is subsequently cut into particles, thereby obtaining expanded beads with a nearly spherical shape. Similar to the technology disclosed in Patent Document 7, this method fails to solve the problem of high density of obtained expanded beads.

As will be appreciated from Patent Documents 6 to 8, the extrusion foaming method has a problem because it is difficult to obtain expanded beads having a low density and showing excellent in-mold moldability.

D9 discloses polylactic acid resin particle impregnated with a foaming agent. This resin particle is prepared by impregnating a foaming agent to a granular resin composition, while using a dispersion stabilizer in a hydrophobic organic medium.

D10 directs a liphatic polyester resin composition comprising in addition an organized lamellar silicate, talc, non-ionic surfactant and a vinyl polymer.

D11 discloses a method for manufacturing a moulding from PLA foam particles.

With a view toward solving the problems of the above prior arts, the present inventors have tried a dispersing medium release foaming method. Namely, the present inventors have tried a method in which polylactic acid-based resin particles are dispersed in an aqueous dispersing medium in a closed vessel in the presence of a physical blowing agent with heating to obtain foamable polylactic acid-based resin particles containing the blowing agent, the foamable resin particles being subsequently released together with the dispersing medium to an atmosphere which is maintained at a pressure lower than that in the closed vessel so that the resin particles are foamed and expanded. It has been found that the above method can produce polylactic acid-based resin expanded beads having relatively high expansion ratio and showing good secondary expansion property and fusion bonding property at the time of in-mold molding without need to severely control the degree of crystallinity of the polylactic acid-based resin expanded beads.

However, although in-mold molding of the obtained expanded beads gives an expanded beads molded article having good appearance, the expanded beads are apt to shrink so that there arise new problems that physical properties inherent to the polylactic acid resin are not sufficiently maintained and the mechanical properties of the expanded beads molded article are not sufficiently developed.

Shrunken expanded beads require troublesome control of expansion ratio. Additionally, although shrunken expanded beads, when molded in a mold cavity, can give a molded article, it is difficult to sufficiently develop the physical properties of the polylactic acid resin. The reason for this is considered that a physical property improving effect attributed to the orientation of the polymer as a consequence of expansion and stretching is not fully achieved.

In view of the above-described new problems, the present invention is aimed at the provision of a process for producing expanded beads that excel in secondary expansion efficiency and fusion-bonding property at the time of in-mold molding and that can produce a polylactic acid-based resin expanded beads molded article having excellent mechanical properties.

Means for Solving the Problems:

In accordance with the present invention there are provided the following polylactic acid-based resin expanded beads:

[1] A process for producing polylactic acid-based resin expanded beads, comprising a step of impregnating resin particles, dispersed in an aqueous dispersing medium in a closed vessel, with a physical blowing agent to obtain foamable particles, and a step of releasing the foamable particles, which are in a softened state, to an atmosphere having a pressure lower than that in the closed vessel together with the dispersing medium to foam and expand the foamable particles,

wherein the resin particles are epoxide-modified polylactic acid-based resin particles that satisfy the following formulas (1) and (2):

$$20 \text{ mN} \leq MT \leq 200 \text{ mN} \qquad (1)$$

$$\log MT \geq 0.93 \log \eta - 1.90 \qquad (2)$$

wherein MT represents a melt tension [mN] of the epoxide-modified polylactic acid-based resin particles at 190°C, $\eta$ represents a melt viscosity [Pa·s] of the epoxide-modified polylactic acid-based resin particles at 190°C and a shear speed of 20 sec$^{-1}$.

[2] The process for producing polylactic acid-based resin expanded beads as recited in above [1], wherein the epoxide is an epoxy group-containing acrylic-based polymer having an epoxy value of 1.2 to 2.4 meq/g and a weight average molecular weight of $8.0 \times 10^3$ to $1.5 \times 10^4$.

Effects of the Invention:

In the process for producing polylactic acid-based resin expanded beads according to the present invention, polylactic acid-based resin expanded beads are produced by a hereinafter described dispersing medium release foaming method using resin particles formed of a modified polylactic acid-based resin that is modified with an epoxide and that shows specific ranges of melt tension and melt viscosity. By this expedience, it is possible to obtain polylactic acid-based resin expanded beads that have a low apparent density and that are capable of producing a low density expanded beads molded article having particularly excellent mechanical properties by in-mold molding.

BRIEF DESCRIPTION OF DRAWINGS

FIG. 1 illustrates an example of a first time DSC curve (I) obtained by heat flux differential scanning calorimetry;

FIG. 2 illustrates an example of a second time DSC curve (I) obtained by heat flux differential scanning calorimetry;

FIG. 3 illustrates an example of a second time DSC curve (II) showing an endothermic calorific value (Rr:endo) of a measurement sample as measured with a heat flux differential scanning calorimeter;

FIG. 4 illustrates an example of a second time DSC curve (II) showing an endothermic calorific value (Rr:endo) of a measurement sample as measured with a heat flux differential scanning calorimeter;

FIG. 5 illustrates an example of a first time DSC curve (I) showing an exothermic calorific value (Bfc:exo) and an endothermic calorific value (Bfc:endo) of a measurement sample as measured with a heat flux differential scanning calorimeter;

FIG. 6 illustrates an example of a first time DSC curve (I) showing an exothermic calorific value (Bfc:exo) and an endothermic calorific value (Bfc:endo) of a measurement sample as measured with a heat flux differential scanning calorimeter; and

FIG. 7 illustrates an example of a first time DSC curve (I) showing an exothermic calorific value (Bfc:exo) and an endothermic calorific value (Bfc:endo) of a measurement sample as measured with a heat flux differential scanning calorimeter.

EMBODIMENTS OF THE INVENTION

A method for producing polylactic acid-based resin expanded beads according to the present invention will be described in detail below. The present invention relates to a process for producing polylactic acid-based resin expanded beads, which includes a step of impregnating resin particles, dispersed in a dispersing medium in a closed vessel, with a physical blowing agent to obtain foamable particles, and a step of releasing the foamable particles, which are in a softened state, to an atmosphere having a pressure lower than that in the closed vessel together with the dispersing medium to foam and expand the foamable particles. The present invention is characterized in that the resin particles are comprised of a specific modified polylactic acid-based resin which will be described hereinafter. In the present specification, "polylactic acid-based resin expanded beads" will be occasionally referred to simply as "expanded beads", "polylactic acid-based resin" will be occasionally referred to as "PLA resin", "modified polylactic acid-based resin" will be occasionally referred to as "modified PLA resin", and "resin particles comprised of a specific modified polylactic acid-based resin" will be occasionally referred to simply as "resin particles".

In one preferred embodiment of the present invention, expanded beads are produced by a method which is a so-called dispersing medium release foaming method and which includes dispersing resin particles in an aqueous dispersing medium contained in a closed vessel in the presence or absence of a physical blowing agent, injecting a physical blowing agent into the vessel while heating the inside of the vessel to impregnate the physical blowing agent into the resin particles to obtain foamable resin particles, and releasing the foamable resin particles together with the aqueous dispersing medium from the vessel maintained at a high temperature and a high pressure to an atmosphere having a pressure lower than that inside the vessel, thereby to obtain expanded beads. In the dispersing medium release foaming method, the physical blowing agent may be injected into the closed vessel either before or after heating the vessel. Alternatively, in lieu of injection of the physical blowing agent into the vessel, it is possible to adopt a method in which polylactic acid-based resin particles which have been previously impregnated with a physical blowing agent are charged in the closed vessel.

The PLA resin used in the process of the present invention may be polylactic acid or a mixture of polylactic acid with other resin or resins. The polylactic acid is preferably a polymer containing at least 50 mol % of component units derived from lactic acid. Examples of the polylactic acid include (a) a polymer of lactic acid, (b) a copolymer of lactic acid with other aliphatic hydroxycarboxylic acid or acids, (c) a copolymer of lactic acid with an aliphatic polyhydric alcohol and an aliphatic polycarboxylic acid, (d) a copolymer of lactic acid with an aliphatic polycarboxylic acid, (e) a copolymer of lactic acid with an aliphatic polyhydric alcohol, and (f) a mixture of two or more of (a)-(e) above. Examples of the polylactic acid also include so-called stereocomplex polylactic acid and stereoblock polylactic acid. Specific examples of the lactic acid include L-lactic acid, D-lactic acid, DL-lactic acid, a cyclic dimer thereof (i.e. L-lactide, D-lactide or DL-lactide) and mixtures thereof.

Examples of other aliphatic hydroxycarboxylic acid in (b) above include glycolic acid, hydroxybutyric acid, hydroxyvaleric acid, hydroxycaproic acid and hydroxyheptoic acid. Examples of the aliphatic polyhydric alcohol in (c) and (e) above include ethylene glycol, 1,4-butanediol, 1,6-hexanediol, 1,4-cyclohexanedimethanol, neopentyl glycol, decamethylene glycol, glycerin, trimethylolpropane and pentaerythritol. Examples of the aliphatic polycarboxylic acid in (c) and (d) above include succinic acid, adipic acid, suberic acid, sebacic acid, dodecanedicarboxylic acid, succinic anhydride, adipic anhydride, trimesic acid, propanetricarboxylic acid, pyromellitic acid and pyromellitic anhydride.

As examples of the method for preparing polylactic acid used in the process of the present invention, there may be mentioned a method in which lactic acid or a mixture of lactic acid and aliphatic hydroxycarboxylic acid is subjected to a direct dehydration polycondensation (preparation method disclosed, for example, in US-A-5,310,865); a method in which a cyclic dimer of lactic acid (namely lactide) is subjected to ring-open polymerization (preparation method disclosed, for example, in US-A-2,758,987); a method in which cyclic dimers of lactic acid and an aliphatic hydroxycarboxylic acid, such as lactide and glycolide, and ε-caprolactone are subjected to ring-open polymerization in the presence of a catalyst (preparation method disclosed, for example, in US-A-4,057,537); a method in which a mixture of lactic acid, an aliphatic dihydric alcohol and an aliphatic dibasic acid is subjected to direct dehydration polycondensation (preparation method disclosed, for example, in US-A-5,428,126); a method in which lactic acid, an aliphatic dihydric alcohol and an aliphatic dibasic acid are subjected to polycondensation in an organic solvent (preparation method disclosed, for example, in EP-A-0712880A2); and a method in which a lactic acid polymer is subjected to dehydration polycondensation in the presence of a catalyst to produce a polyester and in which at least one step of polymerization in a solid phase is involved during the course of the polycondensation. The method for producing polylactic acid is not limited to the above methods.

The PLA resin used in the present invention is modified with an epoxide. Thus, the expanded beads are produced using the modified PLA resin. As the epoxide, there may be mentioned an epoxy group-containing acrylic-based polymer. The epoxy group-containing acrylic-based polymer preferably has a weight average molecular weight of $8.0 \times 10^3$ to $1.5 \times 10^4$. The acrylic-based polymer preferably has an epoxy value of at least 1.2 meq/g, particularly preferably 1.2 to 2.4 meq/g.

The epoxy group-containing acrylic-based polymer may be obtained by polymerizing an acrylic monomer having an epoxy group. Examples of the acrylic monomer having an epoxy group include glycidyl (meth)acrylate, (meth)acrylic acid ester having a cyclohexene oxide structure and (meth)acryl glycidyl ether. Especially preferred is a (meth)acrylic acid ester having a glycidyl (meth)acrylate structure which has high reactivity.

The acrylic-based polymer may also be a polymer obtained by copolymerizing an acrylic monomer having an epoxy group and other monomer capable of copolymerizing with the acrylic monomer. In such a copolymer, the content of the epoxy group-containing acrylic monomer units is preferably 10 to 70% by weight, more preferably 20 to 60% by weight.

Examples of the other monomer capable of copolymerizing with the acrylic monomer having an epoxy group include styrene-based monomers such as styrene and α-methyl styrene; alkyl (meth)acrylates having a $C_1$ to $C_{22}$ alkyl group (the alkyl group may be straight chain or branched) such as methyl (meth)acrylate, ethyl (meth)acrylate, propyl (meth)acrylate, butyl (meth)acrylate, 2-ethylhexyl (meth)acrylate, cyclohexyl (meth)acrylate, stearyl (meth)acrylate and methoxyethyl (meth)acrylate; (meth)acrylic acid esters of polyalkylene glycol; alkoxyalkyl

(meth)acrylates; hydroxyalkyl (meth)acrylates; dialkylaminoalkyl (meth)acrylates; benzyl (meth)acrylate; phenoxyalkyl (meth)acrylates; isobornyl (meth)acrylate; and alkoxysilylalkyl (meth)acrylates. These monomers may be used singly or in combination of two or more thereof. As used herein the term "meth(acrylic) acid" is intended to refer to acrylic acid and methacrylic acid.

The amount of the epoxide added to the PLA resin is such that the modified PLA resin satisfies the conditions (1) and (2) shown below. Concretely, the adding amount of the epoxide is preferably 0.5 to 30 parts by weight, more preferably 0.8 to 25 parts by weight, per 100 parts by weight of the PLA resin, though the amount varies with the reactivity of the epoxide.

$$20 \text{ mN} \leq MT \leq 200 \text{ mN} \qquad (1)$$

$$\log MT \geq 0.93 \log \eta - 1.90 \qquad (2)$$

(wherein MT represents a melt tension [mN] of the modified PLA resin at 190°C, $\eta$ represents a melt viscosity [Pa·s] of the modified PLA resin at 190°C and a shear speed of 20 sec$^{-1}$).

When the melt tension and melt viscosity of the modified PLA resin fall within the specific ranges that are determined by the above conditions (1) and (2), the modified PLA resin exhibits a suitable viscoelastic behavior at the time the foamable particles are foamed and expanded by the aforementioned dispersing medium release foaming method and can be extensively stretched and molecularly oriented without causing breakage of cell walls. Additionally, it is believed that because the molecular weight of the modified PLA resin is increased, the cell walls have a significantly improved strength so that shrinkage of the expanded beads after foaming is prevented. For this reason, the physical properties inherent to the PLA resin are considered to be effectively exploited. Moreover, it is believed that, when such expanded beads are heated and molded in a mold cavity, the cell walls are stretched by further expansion of the expanded beads in the mold cavity, so that expanded beads molded articles having excellent mechanical strength can be obtained.

From the above points of view, the upper limit of the melt tension in the above condition (1) is preferably 190 mN, more preferably 100 mN, while the lower limit of the melt tension is preferably 25 mN, more preferably 30 mN, particularly preferably 35 mN.

It is preferred that the melt tension and melt viscosity satisfy the condition (3) shown below, particularly preferably the condition (4) shown below:

$$\log MT \geq 0.93 \log \eta - 1.85 \qquad (3)$$

$$\log MT \geq 0.93 \log \eta - 1.80 \qquad (4)$$

(wherein MT and $\eta$ are as defined above).

The modified PLA resin, whose melt tension and melt viscosity satisfy the above conditions, can give expanded beads in which shrinkage is suppressed and with which an expanded beads molded article (hereinafter occasionally simply referred to as "molded article") having significantly improved compressive strength and bending modulus as compared with the conventional products can be obtained by in-mold molding. The reason for this is considered to be that, during the expansion step, cell walls formed are sufficiently stretched until stretching has ceased to proceed and growth of the cells has been terminated, so that the resin can sufficiently undergo molecular orientation. Further, the expanded beads formed of the modified PLA resin that satisfies the above conditions (1) and (2) excel in secondary expansion property and fusion bonding property at the time of in-mold molding. The reason for this is considered to be that the PLA resin which meets the above conditions (1) and (2) exhibits a proper viscoelastic behavior so that the cell walls are hardly broken at the time of foaming. This means that the expanded beads obtained are excellent in closed cell content and, therefore, in secondary expansion property at the time of in-mold molding, and can sufficiently fuse-bond to each other to give a molded article having excellent fusion bonding property.

The melt viscosity of the modified PLA resin as used herein may be measured using a measuring device such as Capirograph 1D (manufactured by Toyo Seiki Seisaku-Sho, Ltd.). Concretely, use is made of a cylinder having a cylinder diameter of 9.55 mm and a length of 350 mm and an orifice having a nozzle diameter of 1.0 mm and a length of 10 mm. The cylinder and the orifice are set at a temperature of 190°C. A required amount of a specimen which has been fully dried at 80°C is charged into the cylinder and held for 4 minutes. The resulting molten specimen is then extruded in the form of a string through the orifice at a shear speed of 20 sec$^{-1}$ to measure the melt viscosity.

The melt tension as used herein may be measured by a speed-increasing winding method using Capirograph 1D (manufactured by Toyo Seiki Seisaku-Sho, Ltd.). Concretely, use is made of a cylinder having a cylinder diameter of 9.55 mm and a length of 350 mm and an orifice having a nozzle diameter of 2.095 mm and a length of 8 mm. The cylinder and the orifice are set at a temperature of 190°C. A required amount of a specimen which has been fully dried at 80°C is charged into the cylinder and held for 4 minutes. The resulting molten specimen is then extruded in the form of a string through the orifice at a piston speed of 10 mm/minute. The extruded string is put on a tension-detecting pulley having a diameter of 45 mm and is taken up on a take-up roller while increasing the take-up speed at a constant take-up acceleration rate such that the take-up speed increases from 0 m/minute to 200 m/min through a period of 10 minutes to detect the melt tension at the breakage of the string by the Capirograph device. When the string is not broken even when the take-up speed reaches 200 m/min, the melt tension detected by the device at the take-up speed of 200 m/min is adopted. The above measurement is carried out for ten different specimens. From the obtained ten measured maximum values, the largest three values and the smallest three values are excluded. The arithmetic mean of the rest four maximum values is the melt tension (mN) for the purpose of the present invention.

The measurement of each of the melt viscosity and melt tension of the modified PLA resin is basically carried out on the resin particles that are to be placed in a pressure resisting vessel when a dispersing medium release foaming method is adopted. When modification of the PLA resin with an epoxide is carried out in the pressure resisting vessel after charging the PLA resin particles in the vessel, the measurement of each of the melt viscosity and melt tension of the modified PLA resin is carried out after the resin has been modified and sampled from the vessel before impregnation of the blowing agent.

The modified PLA resin used in the present invention is preferably capped at its molecular chain ends. By this, it is possible to surely suppress hydrolysis during the course of the preparation of expanded beads, so that the dispersing medium release foaming can be much easily carried out. Namely, it becomes easy to reliably form and control the high temperature peak without fear of hydrolysis which may cause deterioration of physical properties of the resin. Thus, it becomes easy to produce excellent expanded beads that can resist hydrolysis of the resin during in-mold molding and can withstand the in-mold molding. Additionally, a molded article obtained by in-mold molding has improved durability.

Examples of the end capping agent include carbodiimide compounds, oxazoline compounds, isocyanate compounds and epoxy compounds. Above all, carbodiimide compounds are preferred. Specific examples of the diimide compounds include an aromatic monocarbodiimide such as bis(dipropylphenyl)carbodiimide, an aliphatic polycarbodiimide such as poly(4,4'-dicyclohexylmethanecarbodiimide, and an aromatic polycarbodiimide.

These end capping agents may be used alone or in combination of two or more thereof. The using amount of the end capping agent is preferably 0.1 to 5 parts by weight, more preferably 0.5 to 3 parts by weight, per 100 parts by weight of the modified PLA resin.

The PLA resin used in the present invention may contain other resin or resins as long as the objects and effects of the present invention are not adversely affected. In the present invention, when the PLA resin is a mixed resin composed of polylactic acid and other resin or resins, it is preferred that the polylactic acid is contained in the mixed resin in an amount of at least 50% by weight, more preferably at least 70 % by weight, still more preferably at least 90 % by weight. Examples of the other resin to be mixed with the polylactic acid include a polyethylene resin, a polypropylene resin, a polystyrene resin, a polyester resin and a polycarbonate resin. Above all, the use of a biodegradable aliphatic polyester resin containing at least 35 mol % of aliphatic ester component units is preferred. Examples of the aliphatic polyester resin include a polycondensation product of a hydroxyacid other than the PLA resins, a ring open polymerization product of a lactone (e.g. polycaprolactone), and a polycondensation product of an aliphatic polyhydric alcohol with an aliphatic polycarboxylic acid or an aromatic polycarboxylic acid, such as polybutylene succinate, polybutylene adipate, polybutylene succinate adipate and poly(butylene adipate/terephthalate).

If necessary, additives may be added as appropriate to the PLA resin which forms the expanded beads of the present invention. Examples of the additive include a coloring agent, a flame retardant, an antistatic agent, a weatherability agent and an electric conductivity imparting agent.

When the PLA resin is mixed with additives, the additives may be kneaded as such together with the PLA resin. In view of dispersing efficiency of the additives into the PLA resin, however, the additives are generally formed into a master batch which is then kneaded with the PLA resin. The additives are preferably added in an amount of 0.001 to 20 parts by weight, more preferably 0.01 to 5 parts by weight, per 100 pars by weight of the PLA resin, though the amount varies with the kind of the additives.

In the process of the present invention, it is desired that the foamable resin particles prepared using a modified PLA resin that satisfies the above conditions (1) and (2) are released to a low pressure zone at such a temperature condition in which a temperature range in which the modified PLA resin can be properly foamed overlaps a temperature range in which the modified PLA resin that forms the cell walls of the resin particles can be properly stretched and oriented. In order to enable the overlapping of the above temperature requirement, such a modified PLA resin as to satisfy the above conditions (1) and (2) is employed in the present invention. To be more specific, the foaming temperature is preferably from (melting point minus 10°C) to (melting point minus 30°C), more preferably from (melting point minus 15°C) to (melting point minus 25°C), where the melting point is that of the modified PLA resin. When the foaming temperature is excessively low, it is difficult to obtain expanded beads with a low apparent density. When excessively high, on the other hand, shrinkage of the expanded beads is apt to occur and, thus, there is a possibility that the mechanical properties of molded articles obtained by in-mold molding of the obtained expanded beads are deteriorated.

In order to obtain expanded beads in which the resin forming cell walls as a result of foaming is stretched and molecularly oriented and which have excellent mechanical properties, it is preferred that the expanded beads immediately after the foaming are rapidly cooled. When the expanded beads after the foaming are rapidly cooled to a temperature lower than the glass transition temperature of the PLA resin particles, the mobility of non-crystalline molecular chains in the molecularly oriented state decreases so that a high stretching effect may be obtained. For this reason, shrinkage of the expanded beads may also be prevented by the rapid cooling. Examples of the method for rapidly cooling the expanded beads include a method in which air as a cooling medium is fed to the atmosphere where the expansion has been completed, a method in which water as a cooling medium is fed to the atmosphere where the expansion has been completed, and a method in which the foamable resin particles are allowed to foam and expand in water contained in a tank.

In the process of the present invention, it is preferred resin particles are heat treated in a closed vessel at a temperature at which crystals thereof are not completely melted, so that the obtained expanded beads show a high temperature peak in their first time DSC curve (I) which is described hereinafter. The heat treatment is carried out by holding the resin particles at a specific temperature and for a specific period of time as described below. The temperature at which the high temperature peak is allowed to develop is generally in the range from [melting point minus 30°C] to [melting point minus 10°C] where the melting point is that of the modified PLA resin of which the resin particles are formed, although the temperature varies depending upon the kind of the blowing agent and the aimed apparent density of the expanded beads. The heat treatment time is generally 5 to 60 minutes, preferably 5 to 15 minutes. Too long a heat treatment time may cause hydrolysis of the modified PLA resin.

As a consequence of the above-described heat treatment, the obtained expanded beads give a first time DSC curve (I) and a second time DSC curve (I) when measured according to heat flux differential scanning calorimetry referenced in JIS K7122(1987) in such a manner that the expanded beads are heated from 23°C to a temperature higher by 30°C than a melting completion temperature thereof at a heating speed of 10°C/min, then maintained at the temperature higher by 30°C than the melting completion temperature for 10 minutes, then cooled to 30°C at a cooling speed of 10°C/min and then again heated, for melting, to a temperature higher by 30°C than the melting completion temperature at a heating speed of 10°C/min. The first time DSC curve (I) and second time DSC curve (I) are obtained during the above first time heating and the second time heating, respectively.

The first time DSC curve (I) has fusion peak(s) (hereinafter occasionally referred to as "high temperature peak") having a peak top temperature which is higher than a reference peak top temperature (and which is not the same as the reference peak top temperature), and fusion peak(s) (hereinafter occasionally referred to as "intrinsic peak") having a peak top temperature which is lower than the reference peak top temperature (or which may be the same as the reference peak top temperature). The reference peak top temperature is a peak top temperature of a fusion peak of the second time DSC curve (I). When, in the second time DSC curve (I), there are a plurality of fusion peaks or when there is a shoulder on high temperature side a fusion peak, then the "peak top temperature of a fusion peak of the second time DSC curve (I)" is the peak top temperature of the fusion peak or the flection point temperature of the shoulder that is the highest among the peak top temperatures of the fusion peaks and the flection point temperatures of the shoulders.

It is believed that the expanded beads, which show the high temperature peak, have improved heat resistance and solidity at high temperatures and are prevented from excessively secondarily expanding during in-mold molding of the expanded beads, so that a heating medium can sufficiently heat the expanded beads located all parts in the mold cavity. As a result, the fusion bonding of the expanded beads during the in-mold molding is improved. It follows that the obtained molded article shows excellent fusion bonding even when the thickness thereof is large or the shape thereof is complicated.

The above-described high temperature peak appears in a first time DSC curve (I) obtained in the measurement of the expanded beads by differential scanning calorimetry, but does not appear in a second time DSC curve (I). The high temperature peak that appears in the first time DSC curve (I) of the expanded beads is attributed to crystal growth of the polylactic acid resin during a heat treatment which will be described hereinafter. The intrinsic peak that appears in the second time DSC curve (I) of the expanded beads is a fusion peak which is attributed to the intrinsic crystal structure of the modified PLA resin. The phenomenon of appearance of such a high temperature peak in the first time DSC curve (I) of the expanded beads is considered to be ascribed to secondary crystals formed through the thermal history in a process for foaming and expanding resin particles to obtain the expanded beads.

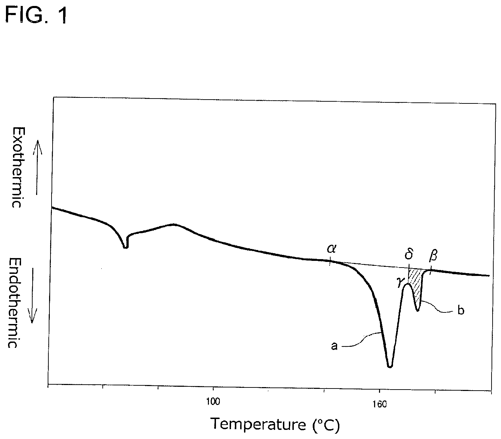

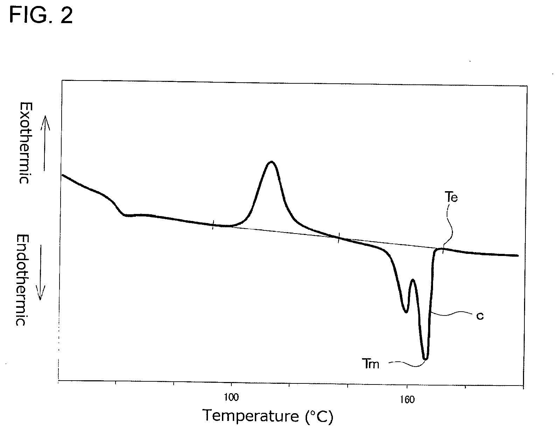

FIG. 1 illustrates an example of the first time DSC curve (I) and FIG. 2 illustrates an example of the second time DSC curve (I). From a comparison of FIG. 1 and FIG. 2, it will be seen that, when the peak top temperature of the higher temperature-side fusion peak among the two fusion peaks in FIG. 2 is regarded as being a reference peak top temperature, the high temperature peak is a fusion peak in FIG. 1 which has a peak top temperature higher than the reference peak top temperature, while the intrinsic peak is a fusion peak which has a peak top temperature not higher than the reference peak top temperature. That is, in FIG. 1, the intrinsic peak is a fusion peak "a" while the high temperature peak is a fusion peak "b".

Incidentally, although the two fusion peaks "a" and "b" in FIG. 1 are each shown as a smooth curve, DSC curves are not always smooth. There are cases where a plurality of overwrapped fusion peaks appear in DSC curves so that a plurality of intrinsic peaks and a plurality of high temperature peaks are present in the DSC curves.

The calorific value (J/g) of the high temperature peak is determined from the first time DSC curve (I) shown in FIG. 1 as follows. A straight line connecting a point $\alpha$ which is a point where an endothermic peak begins separating from a low temperature-side base line and a point $\beta$ which is a point where the endothermic peak returns to a high temperature-side base line is drawn. Next, a line which is in parallel with the ordinate and which passes a point $\gamma$ on the DSC curve at the bottom of the valley between the intrinsic peak "a" and the high temperature peak "b" is drawn. This line crosses the line connecting the points $\alpha$ and $\beta$ at a point $\delta$. The calorific value of the high temperature peak is an amount of endotherm corresponding to the area (shaded portion in FIG. 1) defined by the line connecting the points $\gamma$ and $\delta$, the line connecting the points $\delta$ and $\beta$, and the DSC curve. Incidentally, there is a case where an exothermic peak contiguous with the fusion peak "a" appears in the low-temperature side of the fusion peak "a" (this is not the case in FIG. 1), so that it is difficult to determine the point $\alpha$ as a point at which the fusion peak begins separating from the low temperature-side base line in the above-described manner. In such a case, the point $\alpha$ is determined as a point at which the exothermic peak begins separating from the low temperature-side base line.

The endothermic calorific value of the high temperature peak (when the high temperature peak is constituted of a plurality of fusion peaks, a total endothermic calorific value of the fusion peaks) is preferably 0.5 to 8 J/g. If the endothermic calorific value of the high temperature peak (hereinafter occasionally referred to as "high temperature peak calorific value") is excessively small, there is a possibility that those portions of the expanded beads located near the surface of the mold primarily undergo secondary expansion beyond necessary when the expanded beads are heated with steam in the mold cavity at the time of in-mold molding. As a result, the heating medium such as steam is prevented from sufficiently flowing into all parts of the mold cavity filled with the expanded beads, so that it becomes difficult to obtain a molded article having good fusion bonding in a center part thereof. When the high temperature peak has an excessively large endothermic calorific value, on the other hand, the expanded beads cannot sufficiently secondarily expand in an in-mold molding stage. As a result, there is a possibility that it becomes difficult to obtain a molded article having good fusion bonding between the expanded beads and good appearance. For these reasons, the high temperature peak calorific value is more preferably 1 to 7 J/g. The upper limit of the high temperature peak calorific value is generally 25 J/g.

In the present specification, a peak top temperature of a fusion peak that has the largest area in the second time DSC curve (I), i.e. the peak top temperature of the fusion peak "c" is defined as a melting point Tm of the PLA resin, and the temperature at which the skirt on a high temperature-side of the fusion peak returns to the base line is defined as a melting completion temperature Te.

As described above, in the dispersing medium release foaming method, resin particles are dispersed in a dispersing medium, such as, water in a closed vessel (for example, a pressure resisting vessel such as an autoclave), to which a blowing agent is fed under a pressure in a predetermined amount. The dispersion is then stirred at an elevated temperature for a predetermined time to impregnate the blowing agent into the resin particles to obtain foamable particles. The foamable particles in the molten state and the dispersing medium in the vessel are then released from the high temperature and high pressure vessel into an atmosphere having a pressure lower than that within the vessel to allow the foamable particles to foam and expand into expanded beads. At the time of the release, it is preferred that the contents in the vessel are discharged while applying a back pressure to space in the vessel.

When particularly low apparent density (high expansion ratio) expanded beads are to be produced, there may be adopted so-called two-step expansion in which expanded beads produced in the above method are aged in an atmospheric pressure in the customarily employed manner, then charged again in a pressure resisting vessel, then subjected to a pressurizing treatment using a pressurized gas such as air so that the internal pressure of the expanded beads is increased to 0.01 to 0.10 MPa(G) and, finally, heated in a pre-expansion vessel with a heating medium, such as hot wind, steam or a mixture of steam and air, to obtain the desired expanded beads with a high expansion ratio.

As the dispersing medium in which the resin particles are dispersed, water is preferred. However, other than water, a dispersing medium that does not dissolve the polylactic acid resin particles may be used.

A dispersing agent or a dispersing aid may be added to the dispersing medium, if necessary, in dispersing the resin particles in the dispersing medium. Examples of the dispersing agent include inorganic substances such as aluminum oxide, tribasic calcium phosphate, magnesium pyrophosphate, titanium oxide, zinc oxide, basic magnesium carbonate, basic zinc carbonate, calcium carbonate, kaolin, mica and clay; and water soluble polymer protective colloid agents such as polyvinylpyrrolidone, polyvinyl alcohol and methyl cellulose. The dispersing medium may also be incorporated with a dispersing aid such as an anionic surfactant, e.g. sodium dodecylbenzenesulonate and sodium alkanesulfonate. The dispersing agent may be used in an amount of 0.05 to 3 parts by weight per 100 parts by weight of the resin particles, while the dispersing aid may be used in an amount of 0.001 to 0.3 part by weight per 100 parts by weight of the resin particles.

As the physical blowing agent used in the dispersion medium release foaming method, there may be used, for example, organic physical blowing agents such as hydrocarbons (e.g. butane, pentane and hexane), and halogenated hydrocarbons (e.g. 1,1,1,2-tetrafluoroethane and 1,3,3,3-tetrafluoropropene) and inorganic physical blowing agents such as inorganic gas (e.g. carbon dioxide, nitrogen and air) and water. These physical blowing agents may be used singly or in combination of two or more thereof. Among the physical blowing agents, those which are composed mainly of an inorganic physical blowing agent such as carbon dioxide, nitrogen and air are preferably used. Carbon dioxide is particularly preferred. The term "physical blowing agent composed mainly of an inorganic physical blowing agent" as used herein is intended to refer to a physical blowing agent which contains at least 50% by mole, preferably at least 70% by mole, more preferably at least 90% by mole, of an inorganic physical blowing agent in 100% by mole of the total physical blowing agent.

The amount of the physical blowing agent is determined as appropriate in consideration of the kind of the blowing agent, amount of the additives, the apparent density of the desired expanded beads, etc. For example, the inorganic physical blowing agent is used in an amount of about 0.1 to 30 parts by weight, preferably 0.5 to 15 parts by weight, more preferably 1 to 10 parts by weight, per 100 parts by weight of the PLA resin.

Described next is a method for preparing resin particles formed of an epoxide-modified PLA resin and used for the process of the present invention. It is preferred that modification of a PLA resin with an epoxide is carried out during the preparation step of PLA resin particles. In the resin particle preparation step, a PLA resin, an epoxide and, if needed, additives are fed to an extruder and melted and kneaded to modify the PLA resin. The molten kneaded mass thus obtained is extruded in the form of strands through small holes of a mouthpiece attached to a die exit at a tip of the extruder. The extruded strands are cooled by being immersed in water and then cut with a pelletizer such that the resin particles obtained each have a specific weight, whereby resin particles are obtained (a strand cutting method). Alternatively, such resin particles may be obtained by cutting the extruded strands from the small holes of the mouthpiece into resin particles each have a specific weight, the resin particles being cooled after or simultaneous with the cutting (an under-water cutting method).

In the above-described step of modifying the PLA resin, the temperature (generally about 200°C) and pass time in the melting and kneading in the extruder may be determined as appropriate with consideration of the reactivity of the epoxide and the discharging rate of the extruder. In the present invention, the modified PLA resin is obtained through the chemical reaction between the PLA resin and the epoxide. The modifying reaction may be generally carried out within a temperature range of 170 to 230°C.

When the PLA resin is added with the afore-mentioned end capping agent to form an end-capped PLA resin, it is preferable to adopt a process in which the epoxide-modifying step and the terminal end capping step are separately performed, for example, a process in which modification of the PLA resin with an epoxide is followed by the end-capping.

Incidentally, the above-described method of preparing resin particles formed of a modified PLA resin is a preferred method. The present invention is not limited to the preferred method. Rather, a method in which an epoxide-modifying step and a resin particle preparation step are carried out separately, or any other suitable method may be adopted for the purpose of the present invention.

For example, an epoxide-modified PLA resin is previously prepared by melting and kneading a PLA resin and an epoxide. Thereafter, the resulting modified PLA resin is again fed to an extruder, if desired together with additives, to prepare resin particles in the manner as described above. It is also conceivable to produce the aimed resin particles by first dispersing unmodified PLA resin particles in a dispersing medium in a closed vessel and thereafter performing modifying reaction with an epoxide in the closed vessel.

The resin particles preferably have an average weight per one particle of 0.05 to 10 mg, more preferably 0.1 to 4 mg. When the average weight is excessively small, it is necessary to use a special production method. When the average weight is excessively large, on the other hand, there is a possibility that the expanded beads obtained therefrom have a broad density distribution and cannot be filled in a mold cavity in an efficient manner at the time of molding. The shape of the resin particles may be, for example, a cylindrical column, a sphere, a rectangular column, an oval sphere or a cylinder. Expanded beads obtained by foaming and expanding the resin particles have a shape that is similar to that of the resin particles before expansion.

In the resin particle preparation step, the raw material PLA resin is previously dried so that degradation of the PLA resin by hydrolysis is suppressed. In order to suppress degradation of the PLA resin by hydrolysis, a method using an extruder provided with a vent hole may also be adopted so that moisture is removed from the PLA resin by evacuation through the vent hole. The removal of moisture from the PLA resin may also permit the prevention of the generation of air bubbles in the resin particles and may improve the stability of the extrusion procedures.

An additive may be previously incorporated into the resin particles for the purpose of controlling the apparent density and cell diameter of the obtained expanded beads. Examples of the additive include an inorganic powder such as talc, calcium carbonate, borax, zinc borate, aluminum hydroxide and silica, and a polymer such as polytetrafluoroethylene, polyethylene wax, polycarbonate and crosslinked polystyrene. Among the above additives, polytetrafluoroethylene, polyethylene wax and crosslinked polystyrene are preferred. Particularly preferred is hydrophobic polytetrafluoroethylene powder.

Since the apparent density and cell diameter of the expanded beads according to the present invention vary depending upon the blending amount of the above-described additive such as talc, it is expected that the additive has an effect of controlling these properties. The amount of the additive is generally 0.001 to 5 parts by weight, preferably 0.005 to 3 parts by weight, more preferably 0.01 to 2 parts by weight, per 100 parts by weight of the PLA resin. Within such a range, it is possible to reduce the apparent density (to increase the expansion ratio) and to uniformize the cell diameter of the expanded beads.

When the PLA resin is mixed with additives for various purposes, the additives may be kneaded as such together with the PLA resin. In view of dispersing efficiency of the additives, however, the additives are preferably formed into a master batch, which is then kneaded with the PLA resin.

Since the PLA resin is easily hydrolyzed, the additive to be blended with the PLA resin is desired to be selected from hydrophobic substances while avoiding the use of a hydrophilic substance as much as possible. Thus, when a hydrophobic additive is used, it is possible to obtain an effect of the additive while preventing degradation of the PLA resin due to hydrolysis.

In the present invention, it is preferred that the resin particles are prepared in such a way as to have a multi-layer structure (hereinafter occasionally referred to as multi-layered resin particles) which includes a core layer and an outer layer. Such multi-layered resin particles may be produced using a device that has an extruder for forming the core layer, an extruder for forming the outer layer, and a coextrusion die connected to each of the extruders. The coextrusion molding technique is disclosed in, for example, Japanese Kokoku Publications Nos. JP-B-S41-16125, JP-B-S43-23858 and JP-B-S44-29522 and Japanese Kokai Publication No. JP-A-S60-185816.

By foaming and expanding the multi-layered resin particles by the above foaming method, expanded beads having a multi-layer structure (hereinafter occasionally referred to as multi-layer expanded beads) which includes a core layer formed of a PLA resin, and an outer layer covering the core layer and formed of another PLA resin. In this case, at least the core layer of the multi-layer expanded beads should be formed of the modified PLA resin that meets the above-described conditions (1) and (2). In the following description concerning the multi-layer expanded beads, the PLA resin that constitutes the core layer is intended to refer to "modified PLA resin", while the PLA resin that constitutes the outer layer is intended to refer to "unmodified PLA resin" or "modified PLA resin". In the multi-layer expanded beads, it is not necessary that the outer layer should entirely cover the core layer. The resin of which the core layer may be exposed on a part of the exterior surface of the multi-layer expanded beads.

It is preferred that the softening point (B) [°C] of the PLA resin of which the outer layer is formed is lower than the softening point (A) [°C] of the PLA resin of which the core layer is formed and that a difference [(A) - (B)] between the softening point (A) and the softening point (B) is greater than 0°C and is not greater than 105°C, more preferably from 15 to 105°C, still more preferably from 20 to 105°C. The multi-layer expanded beads that show the above specific range of the difference in softening point may be produced by a method which includes coextruding PLA resins with softening points (B) and (A) of the outer and core layers, and foaming and expanding the obtained multi-layered resin particles. When the above range is satisfied, the multi-layer expanded beads which meet the hereinafter described formulas (5) and (6), especially additionally the formula (7) can be efficiently obtained. Such multi-layer expanded beads show excellent fusion bonding property in a further stable manner during an in-mold molding stage. It is preferred, from the standpoint of handling efficiency of the multi-layer expanded beads and mechanical strength at elevated temperatures of molded articles obtained therefrom, that the softening point of the PLA resin of the outer layer not only meets the above-mentioned relationship with the softening point of the PLA resin of the core layer but also is 50°C or more, more preferably 55°C or more, particularly preferably 65°C or more.

As used herein, the term "softening point" is intended to refer to a Vicat softening point as measured according to JIS K7206 (1999), Method A50. In particular, a PLA resin is sufficiently dried in a vacuum oven and pressed at 200°C and 20 MPa (if necessary, air evacuation is carried out so as to prevent inclusion of air bubbles) to obtain a test piece with a length of 20 mm, a width of 20 mm and a thickness of 4 mm. The test piece is annealed in an oven at 80°C for 24 hours and then measured using, for example, HDT/VSPT tester Model TM-4123 manufactured by Ueshima Seisakusho Co., Ltd.

In the multi-layered resin particles and multi-layer expanded beads, it is preferred that the weight ratio of the resin of which the core layer is formed to the resin of which the outer layer is formed is 99.9:0.1 to 75:25, more preferably 99.7:0.3 to 85:15, still more preferably 99.5:0.5 to 90:10. When the weight proportion of the resin of the outer layer is excessively small, the thickness of the outer layer of the multi-layer expanded beads is so thin that the effect of improving the fusion bonding efficiency of the multi-layer expanded beads in an in-mold molding stage decreases. Additionally, there may cause a problem in production efficiency in the production of the multi-layer expanded beads. When the weight proportion of the outer layer is excessively great, on the other hand, the resin forming the outer layer tends to unnecessarily foam to cause a reduction of the effect of improving the fusion bonding efficiency of the multi-layer expanded beads in an in-mold molding stage. Additionally, there is a possibility that the mechanical properties of the molded article is deteriorated. In the multi-layer expanded beads, the resin forming the outer layer may be foamed as long as the objects and effects of the present invention are not adversely affected. In the multi-layer expanded beads, the weight ratio of the resin of which the core layer is formed to the resin of which the outer layer is formed may be controlled by controlling the weight ratio of the resin of which a core layer of resin particles is formed to the resin of which the outer layer of the resin particles is formed.

The above-described end capping agent, when added to the PLA resin forming the multi-layered resin particles or multi-layer expanded beads, is preferably incorporated at least in the core layer, more preferably in each of the core and outer layers thereof. When at least the PLA resin of the core layer, preferably the PLA resin of each of the core and outer layers, is modified with the end capping agent, it is possible to further suppress hydrolysis thereof during the course of the preparation of multi-layer expanded beads, so that multi-layer expanded beads can be produced in a more stable manner. Further, it is also possible to suppress hydrolysis during the course of the preparation of molded articles so that the production efficiency of the molded articles can be produced in a stable manner. Moreover, when the molded articles are subjected to actual use, they are expected to show further improved durability and withstand use under a high temperature and high humidity environment.

In the multi-layer expanded beads, the thickness of the outer layer is desired to be thin, because mechanical properties of the expanded beads molded article are improved. When the thickness of the outer layer is excessively low, there may be apprehension that the effect of improving fusion bonding between the multi-layer expanded beads is adversely affected. In actual, however, sufficient fusion bonding improving effect is achieved when the thickness is in the range described below. Namely, the outer layer of the multi-layer expanded beads preferably has an average thickness of 0.1 to 25 $\mu$m, more preferably 0.2 to 15 $\mu$m, particularly preferably 0.3 to 10 $\mu$m. The average thickness of the outer layer of the multi-layer expanded beads may be controlled by a control of the weight ratio of a resin of a core layer to a resin of an outer layer of the multi-layered resin particles during the fabrication thereof. The average thickness of the outer layer of the multi-layered resin particles should be controlled as appropriate in view of the weight of the resin particles and desired expansion ratio, but preferably has an average thickness of 2 to 100 $\mu$m, more preferably 3 to 70 $\mu$m, particularly preferably 5 to 50 $\mu$m.

The average thickness of the outer layer of the multi-layer expanded beads is measured as follows. One multi-layer expanded bead is cut into nearly equal halves. From a photograph of the enlarged cross section of the bead, the thickness of the outer layer in each of the four positions (upper and lower sides, and left and right sides) thereof is measured. The arithmetic mean of the four thickness values is the thickness of the outer layer of the expanded bead. Similar procedures are repeated for a total of 10 expanded beads. The arithmetic mean of the ten thickness values is the average thickness of the outer layer of the expanded beads. The average thickness of the outer layer of the multi-layered resin particles is also measured in a similar manner. In the multi-layer expanded beads and multi-layered resin particles, when the outer layer is formed on parts of the peripheral surface of the core layer, there may arise a case where the thickness of the outer layer cannot be measured in any way at the above four positions. In such a case, the thickness of the outer layer is measured at four randomly selected measurable positions and the arithmetic mean thereof is defined as the thickness of the outer layer of the multi-layer expanded beads or resin particles. Also, when the outer layer of the expanded beads is not easily discriminated, it is preferable to produce the multi-layer expanded beads in such a manner that a suitable colorant is incorporated in the resin of which the outer layer is formed.

The resin particles, irrespective of whether they are multi-layered resin particles or not, it is preferred that the resin particle as a whole shows a specific endothermic calorific value (Rr:endo). In the case of the multi-layered resin particles, it is preferred that the resin particle additionally shows a specific relationship between the endothermic calorific value (Rs:endo) of an outer layer of the resin particle and the endothermic calorific value (Rc:endo) of a core layer of the resin particle. This is explained in detail below.

In the resin particles of the present invention, it is preferred that an endothermic calorific value (Rr:endo) [J/g] of a whole resin particle after a heat treatment, which is determined in accordance with heat flux differential scanning calorimetry under the hereinafter described Measurement Condition 1, meets the following formula (5):

$$(Rr:endo) > 25 \text{ J/g} \qquad\qquad (5)$$

With regard to the formula (5), the fact that (Rr:endo) is greater than 25 J/g means that, when expanded beads obtained from the resin particles are heat treated under such conditions that crystallization of the polylactic acid which constitutes the expanded beads sufficiently proceeds, the amount of the polylactic acid crystal components of the polylactic acid in the expanded beads is large. Namely, it is meant that when the heat treatment is carried out sufficiently to increase the degree of crystallinity of the polylactic acid which constitutes the expanded beads obtained from the resin particles, a molded article having an increased degree of crystallinity can be obtained. Therefore, it is expected that the obtained molded article has improved mechanical strength and heat resistance such as compressive strength at a high temperature. From this point of view, (Rr:endo) is preferably 30 J/g or more, more preferably 35 J/g or more. The upper limit of (Rr:endo) is generally 70 J/g, preferably 60 J/g.

In the multi-layered resin particles, it is further preferred that the endothermic calorific value (Rs:endo) [J/g] of an outer layer of the resin particle after a heat treatment and the endothermic calorific value (Rc:endo) [J/g] of a core layer of the resin particle after the heat treatment satisfies a relationship represented by the following formula (6):

$$(Rc:endo) > (Rs:endo) \geq 0 \qquad\qquad (6)$$

The fact that the above formula (6) is met means that when the expanded beads obtained from the resin particles which satisfy the formula (6) are heat treated under such conditions that crystallization of the polylactic acid which constitutes the outer layer and core layer of the expanded beads sufficiently proceeds, the amount of the polylactic acid crystal components that constitute the outer layer of the expanded beads is smaller than the amount of the polylactic acid crystal components that constitute the core layer of the expanded beads. This means that, when the expanded beads are sufficiently heat treated, the degree of crystallinity of the polylactic acid in the core layer is increased. Because of the improved degree of crystallinity of the polylactic acid in the core layer of the expanded bead, the expanded beads can show improved heat resistance, etc. as a whole. On the other hand, since the polylactic acid in the outer layer of the expanded beads has a lower degree of crystallinity as compared with that in the core layer of the expanded beads even when the expanded beads are sufficiently heat treated, the softening point of outer layer of the expanded beads is low. Therefore, the expanded beads obtained from resin particles which satisfy the relationship shown in the formula (6) are capable of showing excellent fusion bonding between the expanded beads during an in-mold molding stage, irrespective of the thermal history before and after the fabrication of the expanded beads. From this point of view, the endothermic calorific value (Rs:endo) of the outer layer of the resin particles is preferably 15 J/g or less (inclusive of 0), more preferably 10 J/g or less (inclusive of 0) for reasons of improved fusion bonding property of the expanded beads. For reasons of improved heat resistance and mechanical strength of the expanded beads, the endothermic calorific value (Rc:endo) of the core layer of the resin particles is preferably 25 J/g or more, more preferably 30 J/g or more, still more preferably 35 J/g or more. The upper limit of the endothermic calorific value (Rc:endo) is generally 70 J/g, preferably 60 J/g. It is also preferred that between (Rc:endo) and (Rs:endo) there is a difference in calorific value of at least 10 J/g, more preferably at least 25 J/g. Meanwhile, as long as the formula (6) is met, the polylactic acid that constitutes the outer layer of the multi-layered resin particles may be non-crystalline polylactic acid or a mixture of non-crystalline polylactic acid and crystalline polylactic acid.

As used herein, the endothermic calorific value (Rr:endo) [J/g] of a whole resin particle, the endothermic calorific value (Rs:endo) [J/g] of an outer layer of the multi-layered resin particle and the endothermic calorific value (Rc:endo) [J/g] of a core layer of the multi-layered resin particle are values as determined in accordance with heat flux differential scanning calorimetry referenced in JIS K7122 (1987) under the following Measurement Condition 1.

Measurement Condition 1

[Preparation of measurement specimens]

As a specimen for measuring the endothermic calorific value of a resin particle as a whole, the resin particle is used as such without cutting. As a specimen for measuring the endothermic calorific value of an outer layer of a multi-layered resin particle, the raw material resin which constitutes the outer layer of the multi-layered resin particle is used. As a specimen for measuring the endothermic calorific value of a core layer of a multi-layered resin particle, the raw material resin which constitutes the core layer of the multi-layered resin particle is used.

[Measurement of endothermic calorific values]

The calorific values (Rr:endo), (Rs:endo) and (Rc:endo) are values as determined from DSC curves obtained by first subjecting 1 to 4 mg of each of the measurement specimens to a heat treatment in which each of them is heated, for melting, to a temperature higher by 30°C than a melting completion temperature, then maintained at that temperature for 10 minutes, then cooled to 110°C at a cooling speed of 10°C/min and then maintained at that temperature for 120 min, and then cooling the resulting sample to 30°C at a cooling speed of 10°C/min. Each of the thus heat treated specimens is subsequently heated again, for melting, to a temperature higher by 30°C than a melting completion temperature at a heating speed of 5°C/min to obtain the DSC curve (hereinafter occasionally referred to as "second time DSC curve (II)") in accordance with heat flux differential scanning calorimetry referenced in JIS K7122(1987). When the weight of one resin particle sampled for measurement of (Rr:endo) exceeds 4 mg, the resin particle should be divided into parts with an equal shape (such as into halves) so that the measurement specimen has a weight within the range of 1 to 4 mg.

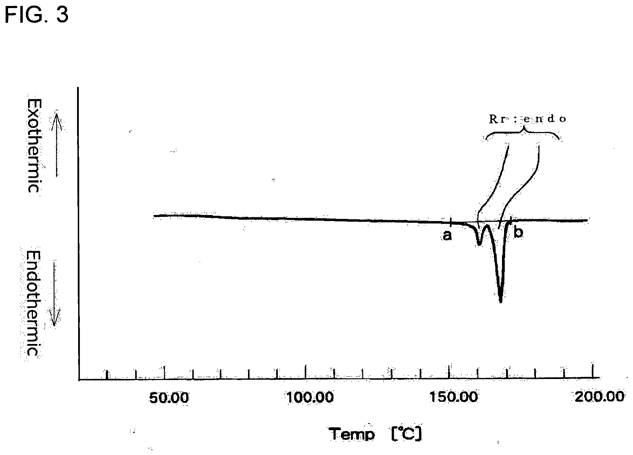

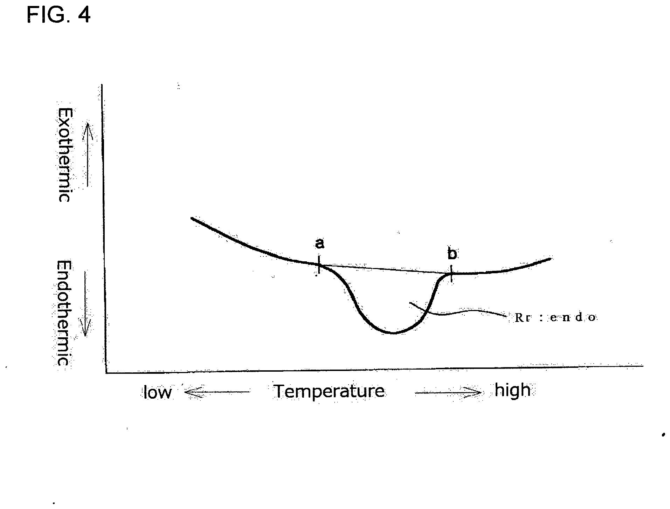

FIG. 3 shows a second time DSC curve (II) in which a point "a" is a point where an endothermic peak begins separating from a low temperature-side base line and a point "b" is a point where the endothermic peak returns to a high temperature-side base line. The endothermic calorific value (Rr:endo) is an area defined by a line passing the points "a" and "b" and the DSC curve. The DSC device should be preferably operated so that the base line is as straight as possible. When the base line is inevitably curved as shown in FIG. 4, the curved base line on the low temperature side is extended to the high temperature side with the radius of the curvature of the base line being maintained. The point at which the endothermic peak begins separating from the low temperature side curved base line is the point "a". Similarly, the curved base line on the high temperature side is extended to the low temperature side with the radius of the curvature of the base line being maintained. The point at which the endothermic peak returns to the high temperature side curved base line is the point "b". The endothermic calorific values (Rs:endo) and (Rc:endo) may also be obtained from their second DSC curves (II) by drawing base lines in the same manner as in the case of (Rr:endo) and may be each determined from the area defined by a line passing the points "a" and "b" and the DSC curve.

In the above-described measurement of the endothermic calorific values (Rr:endo), (Rs:endo) and (Rc:endo), each of the specimens is measured for its DSC curve under conditions including the maintenance at 110°C for 120 minutes. This is for the purpose of determining the endothermic calorific values (Rr:endo), (Rs:endo) and (Rc:endo) in the state in which crystallization of the PLA resin of each specimen has been allowed to proceed as much as possible.

The endothermic calorific value (Rr:endo) determined on a resin particle is the same as that on the expanded bead thereof and also as that on an expanded bead sampled from a molded article thereof. Namely, the endothermic calorific value (Rr:endo) as well as the values (Rs:endo) and (Rc:endo) do not vary depending upon the thermal history of the resin particles.

When the resin particles used in the present invention satisfies the above formula (5), a heat-treated molded article finally obtained from the resin particles has particularly excellent mechanical strength and heat resistance such as compressive strength at a high temperature. Further, when the resin particles are multi-layered resin particles that satisfy the above formula (6) show a low softening point at their surfaces and therefor give expanded beads that exhibit excellent fusion bonding property in in-molding stage.

It is also preferred that the expanded beads produced by the process of the present invention are configured such that an endothermic calorific value (Bfc:endo) [J/g] and an exothermic calorific value (Bfc:exo) of a center region of the expanded beads, before being subjected to a heat treatment, which values are determined in accordance with heat flux differential scanning calorimetry referenced in JIS K7122 (1987) under Measurement Condition 2 shown below, meet the following formula (7):

$$40 > [(Bfc:endo) - (Bfc:exo)] > 10 \qquad (7)$$

Measurement Condition 2

[Preparation of measurement specimen]

[Measurement specimen for measuring endothermic calorific value and exothermic calorific value of a center region of an expanded bead]

An entire surface portion of the expanded bead is cut away to leave a measurement specimen, such that the measurement specimen has a weight of 1/5 to 1/3 the weight of the expanded bead before being cut. More specifically, the expanded bead is cut using a cutter knife or the like for the purpose of obtaining an inside region of the foam of the expanded bead which region does not include the exterior surface of the expanded bead and is to be used for the measurement. It should be borne in mind that the entire exterior surface of the expanded bead should be removed and a center region of the expanded bead which has a weight of 1/5 to 1/3 the weight of the expanded bead before being cut should be cut out, with the center of the center region being made as close to the center of the expanded bead as possible. In this case, the shape of the measurement specimen thus cut out is desired to be as similar as possible to the shape of the expanded bead.

[Measurement of endothermic calorific value and the exothermic calorific value]

The endothermic calorific value (Bfc:endo) and the exothermic calorific value (Bfc:exo) are determined from a first time DSC curve (I) obtained by heating, for melting, 1 to 4 mg of the measurement specimen, sampled from the center region of the expanded bead, from 23°C to a temperature higher by 30°C than a melting completion temperature at a heating speed of 10°C/min in accordance with heat flux differential scanning calorimetry referenced in JIS K7122 (1987). When the amount of the measurement specimen sampled from one expanded bead is less than the intended amount of 1 to 4 mg, the above-described sampling procedure should be repeated for a plurality of expanded beads until 1 to 4 mg of a measurement specimen is collected.

The difference [(Bfc:endo) - (Bfc:exo)] in the above formula (7) represents a difference between the endothermic calorific value (Bfc:endo) that is an energy absorbed when the crystals, which are originally contained in the center region of the expanded bead before the heat flux differential scanning calorimetry measurement is carried out, and crystals, which have been formed in the center region of the expanded bead during the course of heating in the measurement, are melted and the exothermic calorific value (Bfc:exo) that is an energy emitted when the center region of the expanded bead crystallizes during the course of heating in the heat flux differential scanning calorimetry measurement. The fact that the difference is small means that crystallization of the center region of the expanded bead has not yet proceeded before the heat flux differential scanning calorimetry is carried out, while the fact that the difference is large and is near the endothermic calorific value (Bfc:endo) means that crystallization of the center region of the expanded bead has already fully proceeded before the heat flux differential scanning calorimetry is carried out. The difference [(Bfc:endo) - (Bfc:exo)] is preferably within the above-described range of the formula (7) for reasons that good secondary expansion property of the expanded bead during an in-mold molding stage is achieved and, further, the range of the molding temperature within which good expanded beads molded articles are obtainable becomes wide. The difference is more preferably 35 J/g or less, particularly preferably 30 J/g or less, from the view point of the secondary expansion property. From the view point of easiness in controlling the temperature of in-mold molding step as well as prevention of shrinkage of the in-mold molded articles, the difference [(Bfc:endo) - (Bfc:exo)] is preferably 12 J/g or more, particularly preferably 15 J/g or more.

In the case of the above-described multilayer expanded beads, the endothermic calorific value (Bfc:endo) is preferably 25 to 70 J/g. With an increase of the endothermic calorific value (Bfc:endo), the degree of crystallinity of the PLA resin of which the expanded bead is formed becomes higher upon a heat treatment of the expanded bead. As a consequence, a molded article having a higher mechanical strength may be prepared. When the endothermic calorific value (Bfc:endo) is excessively small, on the other hand, there is a possibility that the mechanical strength, especially mechanical strength at high temperatures, of the final molded article is unsatisfactory. From this point of view, (Bfc:endo) is more preferably 30 J/g or more, particularly preferably 35 J/g or more. The upper limit of (Bfc:endo) is generally 70 J/g, preferably 60 J/g.

The exothermic calorific value (Bfc:exo)] is preferably 5 to 30 J/g, more preferably 10 to 25 J/g, for reasons of good secondary expansion property and fusion bonding property of the expanded beads, provided that difference [(Bfc:endo) - (Bfc:exo)] meets with the above requirement. The fact that the exothermic calorific value (Bfc:exo) is high means that crystallization of the PLA resin in the center region of the expanded bead has not yet proceeded before the heat flux differential scanning calorimetry measurement.

The exothermic calorific value (Bfc:exo) and the endothermic calorific value (Bfc:endo) of the expanded beads as used herein are determined by the heat flux differential scanning calorimetry (Condition 2) as referenced in JIS K7122 (1987), as described previously. The measurement of the exothermic calorific value (Bfc:exo) and the endothermic calorific value (Bfc:endo) is carried out as follows.

In a first time DSC curve (I), when a point where the exothermic peak begins separating from a low temperature-side base line of the exothermic peak is assigned as point "c" and a point where the exothermic peak returns to a high temperature-side base line is assigned as point "d", the exothermic calorific value (Bfc:exo) of the expanded beads is a calorific value determined from the area defined by a line passing the points "c" and "d" and the DSC curve. In the first time DSC curve (I), when a point where the endothermic peak begins separating from a low temperature-side base line is assigned as point "e" and a point where the endothermic peak returns to a high temperature-side base line is assigned as point "f", the endothermic calorific value (Bfc:endo) of the expanded beads is a calorific value determined from the area defined by a line passing the points "e" and "f" and the DSC curve. The DSC device should be preferably operated so that the base line of the first time DSC curve (I) is as straight as possible. When the base line is inevitably curved, the curved base line on the low temperature side of the exothermic peak is extended to the high temperature side with the radius of the curvature of the base line being maintained. The point at which the exothermic peak begins separating from the low temperature side curved base line is the point "c". Similarly, the curved base line on the high temperature side of the exothermic peak is extended to the low temperature side with the radius of the curvature of the base line being maintained. The point at which the exothermic peak returns to the high temperature side curved base line is the point "d". Further, the curved base line on the low temperature side of the endothermic peak is extended to the high temperature side with the radius of the curvature of the base line being maintained. The point at which the endothermic peak begins separating from the low temperature side curved base line is the point "e". Similarly, the curved base line on the high temperature side of the endothermic peak is extended to the low temperature side with the radius of the curvature of the base line being maintained. The point at which the endothermic peak returns to the high temperature side curved base line is the point "f".

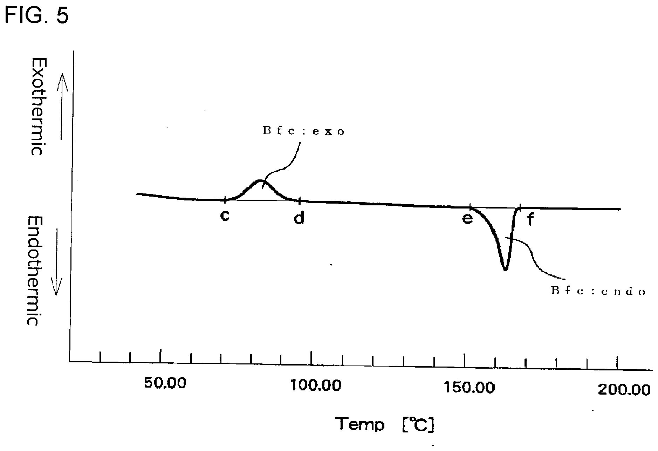

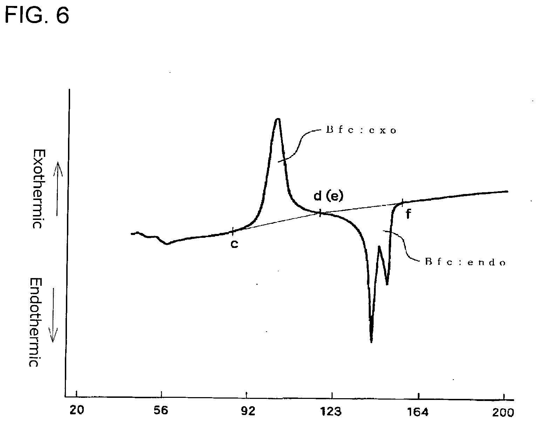

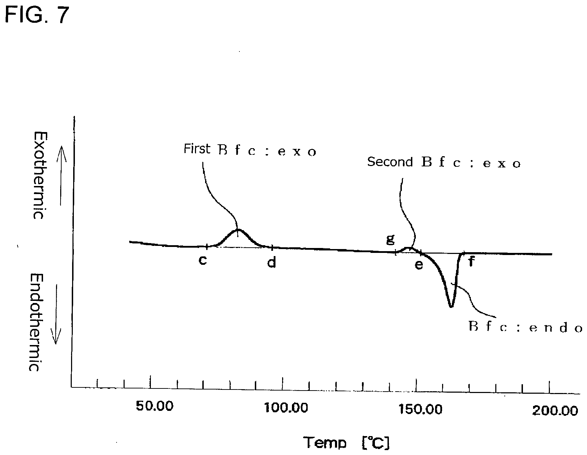

In the case of FIG. 5, for example, an exothermic calorific value (Bfc:exo) of the expanded bead is a calorific value determined from the area which is defined by the straight line passing the points "c" and "d", that are determined in the manner described above, and the DSC curve and which represents the generated calorific value, while an endothermic calorific value (Bfc:endo) is a calorific value determined from the area which is defined by the straight line passing the points "e" and "f" and the DSC curve and which represents the absorbed calorific value. In the case of FIG. 6, it is difficult to determine points "d" and "e" by the above-described method. Thus, in the illustrated case, points "c" and "f" are first determined by the above-described method and a point at which the straight line passing the points "c" and "f" intersects the DSC curve is assigned as the point "d" (also point "e"), whereupon the exothermic calorific value (Bfc:exo) and the endothermic calorific value (Bfc:endo) of the expanded beads are determined. As shown in FIG. 7, there is a case in which a small exothermic peak exists on a low temperature side of the endothermic peak. In such a case, the exothermic calorific value (Bfc:exo) is determined from a sum of an area "A" of the first exothermic peak and an area "B" of the second exothermic peak in FIG. 7. Namely, when a point where the first exothermic peak begins separating from a low temperature-side base line of the first exothermic peak is assigned as point "c" and a point where the first exothermic peak returns to a high temperature-side base line is assigned as point "d", the area "A" is an area defined by a straight line passing the points "c" and "d" and the DSC curve and represents the generated calorific value. On the other hand, when a point where the second exothermic peak begins separating from a low temperature-side base line of the second exothermic peak is assigned as point "g" and a point where the endothermic peak returns to a high temperature-side base line is assigned as point "f", and when a point where a straight line passing the points "g" and "f" intersects the DSC curve is assigned as point "e", the area "B" is an area defined by a straight line passing the points "g" and "e" and the DSC curve and represents the generated calorific value. In FIG. 7, the endothermic calorific value (Bfc:endo) is a calorific value determined from the area which is defined by the straight line passing the points "e" and "f" and the DSC curve and which represents the absorbed calorific value.

The expanded beads produced by the process of the present invention preferably have an apparent density of 24 to 240 g/L, more preferably 40 to 200 g/L, from the standpoint of excellence in lightness in weight, in-mold moldability, mechanical properties and in-mold moldability. When the apparent density is excessively small, there is a possibility that a large shrinkage degree may result after in-mold molding. When the apparent density is excessively high, on the other hand, there is a possibility that a large variation of the apparent density may be apt to result. This causes variation of expandability, fusion bonding property and apparent density of the expanded beads at the time of being heated in a mold cavity and, hence results in deterioration of the physical properties of the obtained molded articles.

As used herein, the apparent density of the expanded beads is measured by the following method. The expanded beads are allowed to stand for aging in a constant temperature and humidity room at 23°C under atmospheric pressure and a relative humidity of 50% for 10 days. In the same room, about 500 mL of the aged expanded beads are weighed to determine their weight W1 (g). The weighed expanded beads are immersed in water at 23°C contained in a measuring cylinder using a wire net or the like tool. From a rise of the water level volume, the volume V1 (L) of the expanded beads placed in the measuring cylinder is determined by subtracting the volume of the wire net and the like tool placed therein. The apparent density (g/L) is calculated by dividing the weight W1 of the expanded beads placed in the measuring cylinder by the volume V1 (W1/V1).

The expanded beads of the present invention preferably have an average cell diameter of 30 to 500 $\mu$m, more preferably 50 to 250 $\mu$m, from the standpoint of their in-mold moldability and improved appearance of the molded article obtained therefrom.

The average cell diameter of the expanded beads is measured as follows. One expanded bead is cut into nearly equal halves. From an enlarged image of the cross section taken by a microscope, the average cell diameter is determined. Namely, on the enlarged image of the cross section of the expanded bead, four line segments each passing nearly through the center of the cross section and extending from one surface of the expanded bead to the other surface thereof are drawn such that eight angularly equally spaced straight lines extend radially from nearly the center of the cross section toward the external surface of the expanded bead. The number of the cells (n1 to n4) that intersect each of the four lines is counted. The total number N (= n1+n2+n3+n4) of the cells that intersect the above four line segments is counted. Also measured is a total length L ($\mu$m) of the four line segments. The value (L/N) obtained by dividing the total length L by the total number N is an average cell diameter of the one expanded bead. Similar procedures are repeated for 10 randomly selected expanded beads in total. The arithmetic mean of the average cell diameters of the ten expanded beads represents the average cell diameter of the expanded beads.

The expanded beads of the present invention preferably have a closed cell content of 80% or more, more preferably 85% or more, still more preferably 90% or more from the standpoint of excellence in in-mold moldability of the expanded beads and capability of providing sufficient mechanical properties of a molded article produced therefrom.

As used herein, the closed cell content of the expanded beads is measured as follows. The expanded beads are allowed to stand for aging in a constant temperature and humidity room at 23°C under atmospheric pressure and a relative humidity of 50% for 10 days. In the same room, about 20 cm$^3$ bulk volume of the expanded beads thus aged are sampled and measured for the precise apparent volume Va by a water immersion method. The sample whose apparent volume Va has been measured is fully dried and measured for its true volume Vx according to Procedure C of ASTM D-2856-70 using Air Comparison Pycnometer Type-930 manufactured by Toshiba Beckman Inc. From the volumes Va and Vx, the closed cell content is calculated by the formula (8) shown below. The average (N=5) is the closed cell content of the expanded beads.

$$\text{Closed cell content (\%)} = (Vx - W/\rho) \times 100/(Va - W/\rho) \qquad (8)$$

wherein

Vx represents the true volume ($cm^3$) of the expanded beads measured by the above method, which corresponds to a sum of a volume of the resin constituting the expanded beads and a total volume of all the closed cells of the expanded beads,

Va represents an apparent volume ($cm^3$) of the expanded beads, which is measured by a rise of the water level when the expanded beads are immersed in water contained in a measuring cylinder,

W is a weight (g) of the sample expanded beads used for the measurement; and

$\rho$ is a density ($g/cm^3$) of the resin constituting the expanded beads.

The expanded beads of the present invention give, upon being subjected to in-mold molding, a molded article. The shape of the molded article is not specifically limited. Not only molded article with a plate-like, columnar, vessel-like or block-like form but also a molded article with a complicated three-dimensional shape or an article with a large thickness may be produced. The molded articles may be suitably used in various applications such as packaging vessels, interior materials for automobiles, cushioning materials and core materials of FRP.

Since the molded article is a product obtained by molding, in a mold cavity, the expanded beads prepared by foaming the specific reformed polylactic acid-based resin particles of the present invention by a dispersion medium release foaming method, the latent physical properties of the PLA resin are improved. Further, the molded article shows excellent compressive strength and bending modulus, because the modified PLA resin is considered to be molecularly oriented sufficiently as a result of stretching of cell walls during foaming of the resin particles. Moreover, when the expanded beads have a high temperature peak as described above, fusion bonding therebetween is improved so that the dimensional stability and mechanical strength of the molded article are further improved. Incidentally, when the molded article is heat treated (heat set) for sufficiently increasing the degree of crystallinity of the PLA resin, more excellent heat resistance and mechanical strength can be achieved.

The molded article of the present invention preferably has a density of 15 to 150 g/L, more preferably 25 to 125 g/L, for reasons of lightness in weight and excellence in mechanical strength.

The molded article preferably has a closed cell content of 50% or more, more preferably 60% or more, still more preferably 70% or more. When the closed cell content is excessively low, there is a possibility that the mechanical strength such as compressive strength of the expanded beads molded article is deteriorated.

The closed cell content of the molded article may be determined in the same manner as that for the measurement of the closed cell content of the expanded beads except that a rectangular parallelepiped measurement sample having a length of 25 mm, a width of 25 mm and a thickness of 30 mm is cut out from a center part of the molded article (skin should be completely cut off).

The degree of fusion bonding of the molded article is preferably 50% or more, more preferably 60% or more, particularly preferably 80% or more. The molded article having a high degree of fusion bonding excels in mechanical strength, particularly in bending strength. The degree of fusion bonding is intended to refer to a percentage of the expanded beads which undergo material failure when the molded article is ruptured, based on the all expanded beads present on the ruptured cross section. When all the expanded beads in the ruptured cross section undergo material failure, the degree of fusion bonding is 100%. Those beads which are not fuse-bonded to each other do not undergo material failure in the ruptured cross section but are separated from each other at their interface.

Description will next be made of a method for producing a molded article using the expanded beads obtained by the process of the present invention. For the preparation of a molded article, any known in-mold molding method may be adopted. In the present invention, an expanded beads molded article may be easily obtained by molding the expanded beads preferably having a high temperature peak in a mold cavity in any known method. Examples of such a method include a compression molding method, a cracking molding method, a pressure molding method, a compression filling molding method and an ambient pressure filling molding method, in each of which a conventional mold for expanded beads is used (see, for example, Japanese Kokoku Publications No. JP-B-S46-38359, No. JP-B-S51-22951, No. JP-B-H04-46217, No. JP-B-H06-22919 and No. JP-B-H06-49795).

As the generally preferably adopted in-mold molding method, there may be mentioned a batch-type in-mold molding method in which expanded beads are filled in a mold cavity of a conventional mold for thermoplastic resin expanded beads adapted to be heated and cooled and to be opened and closed. Steam having a saturation vapor pressure of 0.01 to 0.25 MPa(G), preferably 0.01 to 0.20 MPa(G), is then fed to the mold cavity to heat the expanded beads and to foam, expand and fuse-bond the beads together. The obtained molded article is then cooled and taken out of the mold cavity.

The feed of the steam may be carried out by a conventional method such as a combination of one-direction flow heating, reversed one-direction flow heating and both-direction flow heating. The particularly preferred heating method includes preheating, one-direction flow heating, reversed one-direction flow heating and both-direction flow heating which are successively performed in this order.

The molded article may be also produced by a continuous in-mold molding method in which the expanded beads are fed to a mold space which is defined between a pair of vertically spaced, continuously running belts disposed in a path. During the passage through a steam-heating zone, saturated steam with a saturation vapor pressure of 0.01 to 0.25 MPa(G) is fed to the mold space so that the expanded beads are expanded and fuse-bonded together. The resulting molded article is cooled during its passage through a cooling zone, discharged from the path and successively cut into a desired length (see, for example, Japanese Kokai Publications No. JP-A-H09-104026, No. JP-A-H09-104027 and No. JP-A-H10-180888).

Prior to the above in-mold molding, the expanded beads obtained by the above-described method may be charged in a pressure resisting vessel and treated with a pressurized gas such as air to increase the pressure inside the cells thereof to 0.01 to 0.15 MPa(G). The treated beads are taken out of the vessel and then subjected to in-mold molding. The treated expanded beads exhibit further improved in-mold moldability.

[Example 1]

The process for producing expanded beads according to the present invention will be described in more detail below by way of examples. These examples are not restrictive of the present invention, however.

Examples 1 to 8, 10 and 11 and Comparative Examples 1 to 5

In Examples 1 to 8, 10 and 11, the raw material PLA resin for forming a core layer and epoxide shown in Tables 1-1 and 1-2 were fed to a twin screw extruder having an inside diameter of 30 mm and melted and kneaded at a temperature of 200 to 220°C. Then, the extruded strands were cooled with water and cut with a pelletizer to obtain modified PLA resin pellets that were modified with the epoxide. As the epoxide, ARUFON UG-4035 (Trade name; manufactured by Toagosei Co., Ltd.; acrylic-based polymer; weight average molecular weight: 11,000; epoxy value: 1.8 meq/g) or VYLON RF-100-C01 (Trade name; manufactured by Toyobo Co., Ltd.; polyester-based polymer; weight average molecular weight: 20,000-30,000) was used and fed so that the compounding amount thereof was as shown in Tables 1-1 and 1-2. The epoxide ARUFON UG-4035 was fed in the form of a master batch. The thus obtained modified PLA resin pellets were thoroughly dried at 80°C.

In Examples 1 to 7, 10 and 11 and Comparative Examples 1 to 5, use was made of an extrusion device (for coextrusion) having a single screw extruder (inside diameter: 65 mm) for forming a core layer, another single screw extruder (inside diameter: 30 mm) for forming an outer layer and a coextrusion die attached to exits of the two extruders for forming multi-layered strands. The PLA resin pellets shown in Tables 1-1, 1-2 and 2 for forming a core layer were fed to the extruder for forming a core layer, while the PLA resin pellets shown in Tables 1-1, 1-2 and 2 for forming an outer layer were fed to the extruder for forming an outer layer. The feeds in respective extruders were melted and kneaded. The molten kneaded masses were introduced into the coextrusion die and combined in the die and coextruded in the form of multi-layer strands through small holes of a mouthpiece of the coextrusion die. Each of the strands had a core layer and an outer layer covering the core layer with a weight ratio shown in Tables 1-1, 1-2 and 2. The coextruded strands were cooled with water and then cut with a pelletizer into particles each having a weight 2 mg. Drying of the cut particles gave multi-layered resin particles. Various physical properties of the obtained resin particles, such as melt tension and melt viscosity, are also shown in Tables 1-1, 1-2 and 2.

Meanwhile, a cell controlling agent master batch and an end capping agent master batch were also fed to the extruder for forming a core layer together with the PLA resin, so that the PLA resin of the core layer contained 1,000 ppm by weight of polytetrafluoroethylene powder (Trade name: TFW-1000; manufactured by Seishin Enterprise Co., Ld.) as a cell controlling agent and was end-capped with 1.5% by weight of a carbodiimide compound (Trade name: Stabaxol 1-LF; manufactured by Rhein Chemie; bis(dipropylphenyl)carbodiimide,) as an end capping agent. The PLA resin of the outer layer contained 1.5% by weight of a carbodiimide compound (Trade name: Stabaxol 1-LF; manufactured by Rhein Chemie; bis(dipropylphenyl)carbodiimide) which was mixed into the PLA resin in the form of a master batch.

Single layer resin particles of Example 8 were prepared in the same manner as that of Example 4 except that only the extruder for forming a core layer was operated (the extruder for forming an outer layer was stopped). Various physical properties of the obtained resin particles, such as melt tension and melt viscosity, are also shown in Tables 1-2 and 2.

Using the thus obtained resin particles, expanded beads were next prepared. First, 50 kg of the obtained resin particles were charged in a 400 L closed vessel equipped with a stirrer together with 270 L of water as a dispersing medium, to which 300 g of aluminum oxide as a dispersing agent and 4 g (as effective amount) of a surfactant (sodium alkylbenzenesulfonate, Trade name: Neogen S-20F, manufactured by Dai-ichi Kogyou Seiyaku Co., Ltd.) were added. The contents were then heated with stirring to the foaming temperature shown in Tables 1-1, 1-2 and 2. Carbon dioxide as a blowing agent was then injected into the closed vessel until the pressure within the closed vessel reached the value shown in Tables 1-1, 1-2 and 2. After having been allowed to stand at that temperature for 15 minutes, the contents were released from the closed vessel (inside of which was maintained at the foaming temperature and the pressure shown in Tables 1-1, 1-2 and 2) to the atmospheric having an ambient temperature and an ambient pressure while applying a back pressure with carbon dioxide to maintain the pressure within the vessel at constant, whereby expanded beads having an apparent density as shown in Tables 1-1, 1-2 and 2 were obtained.

Various physical properties of the thus obtained expanded beads such as endothermic calorific value of the high temperature peak, apparent density, closed cell content, average cell diameter and presence or absence of shrinkage thereof (determined with naked eyes), were measured and evaluated and the results are shown in Tables 1-1, 1-2 and 2.

Example 9

Using the multi-layered resin particles obtained in Example 3, expanded beads were produced as follows. The multi-layered resin particles (1 kg) were charged in a 5 L closed vessel together with 3 L of water as a dispersing medium, to which 3 g of aluminum oxide as a dispersing agent and 0.1 g (as effective amount) of a surfactant (sodium alkylbenzenesulfonate, Trade name: Neogen S-20F, manufactured by Dai-ichi Kogyou Seiyaku Co., Ltd.) were added. Then, 75 g of isobutane as a blowing agent were added to the closed vessel with stirring. The contents in the vessel were then heated to the foaming temperature shown in Table 1-2 and maintained at that temperature for 15 minutes. Thereafter, the contents were released from the pressure resisting vessel (inside of which was maintained at the foaming temperature and the pressure shown in Table 1-2) to the atmospheric having an ambient temperature and an ambient pressure while applying a back pressure with nitrogen gas to maintain the pressure within the vessel at constant, whereby expanded beads having an apparent density as shown in Table 1-2 were obtained.

Various physical properties of the thus obtained expanded beads such as endothermic calorific value of the high temperature peak, apparent density, closed cell content, average cell diameter and presence or absence of shrinkage thereof (determined with naked eyes), were measured and evaluated and the results are shown in Table 1-2.

Table 1-1

EP 2 772 509 B1

| | | | Example | 1 | 2 | 3 | 4 | 5 | 6 |
|---|---|---|---|---|---|---|---|---|---|
| Resin Particles | Core layer | PLA resin | Composition | *2) | *2) | *1) | *1) | *1) | *1) |
| | | Epoxide | Kind | *5) | *5) | *5) | *5) | *5) | *5) |
| | | | Adding amount (Wt%) | 3 | 1 | 3 | 3 | 3 | 1 |
| | | Rc:endo (J/g) | | 42 | 42 | 33 | 33 | 33 | 33 |
| | Outer layer | PLA resin | Composition | *3) | *3) | *3) | *3) | *3) | *3) |
| | | | Rs:endo (J/g) | 0 | 0 | 0 | 0 | 0 | 0 |
| | Core layer/Outer layer (weight ratio) | | | 95/5 | 95/5 | 95/5 | 95/5 | 95/5 | 95/5 |
| | MFR (g/10min); 190°C, 2.16 kgf | | | 1.1 | 2.2 | 1.3 | 1.3 | 1.3 | 2.1 |
| | Melt tension MT (mN); 190°C | | | 77 | 43 | 76 | 76 | 76 | 45 |
| | Melt viscosity $\eta$ (Pa·s); 190°C, 20sec$^{-1}$ | | | 5,530 | 3,870 | 4,780 | 4,780 | 4,780 | 3,940 |
| | Rr : endo (J/g) | | | 39 | 40 | 32 | 32 | 32 | 32 |
| | 0.93log$\eta$ − logMT | | | 1.60 | 1.70 | 1.54 | 1.54 | 1.54 | 1.69 |
| | Melting point Tm (°C) | | | 167 | 168 | 152 | 152 | 152 | 154 |
| Expanded Beads | Blowing agent | | | $CO_2$ | $CO_2$ | $CO_2$ | $CO_2$ | $CO_2$ | $CO_2$ |
| | Closed vessel inside pressure (MPa(G)) | | | 2.2 | 2.2 | 2.4 | 2.4 | 2.6 | 2.4 |
| | Foaming temperature (°C) | | | 146.5 | 147.0 | 137.5 | 135.5 | 134.5 | 136.5 |
| | Apparent density (g/L) | | | 119 | 119 | 119 | 119 | 119 | 119 |
| | High temperature peak calorific value of expanded beads (J/g) | | | 0.6 | 1.2 | 0.0 | 1.7 | 4.5 | 2.6 |
| | Exothermic calorific value of center region of expanded beads Bfc:exo (J/g) | | | 19 | 17 | 20 | 17 | 13 | 15 |
| | Endothermic calorific value of center region of expanded beads Bfc:endo (J/g) | | | 31 | 33 | 25 | 27 | 28 | 28 |
| | Bfc:endo - Bfc:exo (J/g) | | | 13 | 16 | 5 | 10 | 15 | 13 |
| | Shrinkage of expanded beads | | | none | none | none | none | none | none |
| | Closed cell content (%) | | | 94 | 94 | 94 | 95 | 95 | 95 |
| | Average cell diameter (μm) | | | 142 | 120 | 132 | 152 | 138 | 155 |

Table 1-2

| | | | Example | 7 | 8 | 9 | 10 | 11 |
|---|---|---|---|---|---|---|---|---|
| Resin Particles | Core layer | PLA resin | Composition | *1) | *1) | *1) | *1) | *1) |
| | | Epoxide | Kind | *6) | *5) | *5) | *6) | *5) |
| | | | Adding amount (Wt.%) | 20 | 3 | 3 | 5 | 3 |
| | | Rc:endo (J/g) | | 31 | 33 | 33 | 33 | 33 |
| | Outer layer | PLA resin | Composition | *3) | — | *3) | *3) | *3) |
| | | | Rs:endo (J/g) | 0 | — | 0 | 0 | 0 |
| | Core layer/Outer layer (weight ratio) | | | 95/5 | — | 95/5 | 95/5 | 95/5 |
| | MFR (g/10min); 190°C, 2.16 kgf | | | 1.8 | 1.3 | 1.3 | 3.6 | 1.3 |
| | Melt tension MT (mN);190°C | | | 52 | 78 | 76 | 23 | 76 |
| | Melt viscosity $\eta$(Pa·s); 190°C, 20sec$^{-1}$ | | | 4,300 | 4,820 | 4,780 | 2,970 | 4,780 |
| | Rr : endo (J/g) | | | 29 | 32 | 32 | 33 | 32 |
| | 0.93log$\eta$ − logMT | | | 1.67 | 1.53 | 1.54 | 1.87 | 1.54 |
| | Melting point Tm (°C) | | | 152 | 152 | 152 | 154 | 152 |
| Expanded Beads | Blowing agent | | | $CO_2$ | $CO_2$ | Isobutane | $CO_2$ | $CO_2$ |
| | Closed vessel inside pressure (MPa(G)) | | | 2.4 | 2.4 | 3.0 | 2.4 | 3.8 |
| | Foaming temperature (°C) | | | 135.5 | 135.5 | 134.0 | 137.5 | 132.0 |
| | Apparent density (g/L) | | | 119 | 119 | 119 | 119 | 61 |
| | High temperature peak calorific value of expanded beads (J/g) | | | 3.6 | 1.6 | 1.0 | 1.2 | 2.2 |
| | Exothermic calorific value of center region of expanded beads Bfc:exo (J/g) | | | 8 | 21 | 11 | 13 | 10 |
| | Endothermic calorific value of center region of expanded beads Bfc:endo (J/g) | | | 29 | 29 | 28 | 29 | 28 |
| | Bfc:endo - Bfc:exo (J/g) | | | 21 | 8 | 17 | 16 | 18 |
| | Shrinkage of expanded beads | | | none | none | none | none | none |
| | Closed cell content (%) | | | 95 | 95 | 95 | 95 | 94 |
| | Average cell diameter (μm) | | | 136 | 143 | 81 | 150 | 121 |

*1): Crystalline PLA; produced by Nature Works LLC (D-isomer content: 4.4%, melting point: 155°C, MFR(190°C/2.16kgf): 2.9 g/10min

*2): Crystalline PLA; produced by Nature Works LLC (D-isomer content: 1.5%, melting point: 168°C, MFR(190°C/2.16kgf): 3.1 g/10min

*3): Non-crystalline PLA; produced by Nature Works LLC (D-isomer content: 11.8%, melting point: not confirmed, MFR(190°C/2.16kgf): 4.4 g/10min

*5): ARUFON UG-4035 manufactured by Toagosei Co., Ltd.

*6): VYLON RF-100-C01 manufactured by Toyobo Co., Ltd.

## Table 2

| Comparative Example | | | | | 1 | 2 | 3 | 4 | 5 |
|---|---|---|---|---|---|---|---|---|---|
| Resin Particles | Core layer | PLA resin | Composition | | *2) | *1) | *4) | *2)/*3 6/4(weight ratio) | *1) |
| | | Epoxide | Kind | | — | — | — | — | — |
| | | | Adding amount (Wt.%) | | 0 | 0 | 0 | 0 | 0 |
| | | Rc:endo (J/g) | | | 42 | 31 | 44 | 26 | 31 |
| | Outer layer | PLA resin | Composition | | *3) | *3) | *3) | *3) | *3) |
| | | | Rs:endo (J/g) | | 0 | 0 | 0 | 0 | 0 |
| | Core layer/Outer layer (weight ratio) | | | | 95/5 | 95/5 | 95/5 | 95/5 | 95/5 |
| | MFR (g/10min); 190°C, 2.16 kgf | | | | 3.7 | 3.5 | 11.4 | 4.5 | 3.5 |
| | Melt tension MT (mN);190°C | | | | 18 | 19 | - | 15 | 19 |
| | Melt viscosity $\eta$(Pa·s); 190°C, 20sec$^{-1}$ | | | | 2,920 | 2,830 | 990 | 2,300 | 2,830 |
| | Rr: endo (J/g) | | | | 42 | 32 | 43 | 26 | 32 |
| | 0.93log$\eta$ − logMT | | | | 1.97 | 1.93 | - | 1.95 | 1.93 |
| | Melting point Tm (°C) | | | | 169 | 155 | 168 | 166 | 155 |
| Expanded Beads | Blowing agent | | | | $CO_2$ | $CO_2$ | $CO_2$ | $CO_2$ | $CO_2$ |
| | Closed vessel inside pressure (MPa(G)) | | | | 2.0 | 2.2 | 2.2 | 2.5 | 3.5 |
| | Foaming temperature (°C) | | | | 148.0 | 139.0 | 148.5 | 146.5 | 135.0 |
| | Apparent density(g/L) | | | | 119 | 119 | 119 | 119 | 61 |
| | High temperature peak calorific value of expanded beads (J/g) | | | | 1.4 | 0.0 | 2.6 | 3.3 | 1.2 |
| | Exothermic calorific value of center region of expanded beads Bfc:exo (J/g) | | | | 21 | 19 | 11 | 9 | 15 |
| | Endothermic calorific value of center region of expanded beads Bfc:endo (J/g) | | | | 37 | 27 | 42 | 24 | 28 |
| | Bfc:endo - Bfc:exo (J/g) | | | | 16 | 8 | 31 | 15 | 13 |
| | Shrinkage of expanded beads | | | | present | none | present | present | none |
| | Closed cell content (%) | | | | 90 | 96 | 92 | 90 | 95 |
| | Average cell diameter (μm) | | | | 133 | 143 | 170 | 161 | 106 |

*1): Crystalline PLA; produced by Nature Works LLC (D-isomer content: 4.4%, melting point: 155°C, MFR(190°C/2.16kgf): 2.9 g/10min

*2): Crystalline PLA; produced by Nature Works LLC (D-isomer content: 1.5%, melting point: 168°C, MFR(190°C/2.16kgf): 3.1 g/10min

*3): Non-crystalline PLA; produced by Nature Works LLC (D-isomer content: 11.8%, melting point: not confirmed, MFR(190°C/2.16kgf): 4.4 g/10min

*4): Crystalline PLA; produced by Nature Works LLC (D-isomer content: 1.4%, melting point: 168°C, MFR(190°C/2.16kgf): 11.6 g/10min

Next, molded articles were prepared using the expanded beads obtained in the foregoing. The expanded beads obtained in each of the above Examples and Comparative Examples were first subjected to a pressurizing treatment to impart the internal pressure shown in Tables 3 and 4. The expanded beads having the increased internal pressure were placed in a cavity of a flat plank mold having a length of 200 mm, a width of 250 mm and a thickness of 50 mm and subjected to an in-mold molding by steam heating to obtain molded articles each in the form of a plank. The heating with steam was performed as follows. Steam was fed for 5 seconds for preheating in such a state that drain valves of the stationary and moveable molds were maintained in an open state. Next, while maintaining only the drain valve on the stationary mold in an open state, steam was fed from the moveable mold for 3 seconds. Then, while maintaining only the drain valve on the moveable mold in an open state, steam was fed from the stationary mold for 3 seconds. Thereafter, heating was carried out by feeding steam from each of the both molds, while maintaining each of the drain valves on the stationary and moveable molds in a closed state, until the pressure within the cavity had reached the molding vapor pressure shown in Tables 3 and 4.

After completion of the heating, the pressure was released and cooling with water was carried out until the pressure of a surface pressure gauge within the mold cavity was reduced to 0.01 MPa(G). The molds were then opened and the molded body was taken out therefrom. The molded body was aged in an oven at 40°C for 15 hours, then aged in an oven at 70°C for another 15 hours, and thereafter allowed to gradually cool to room temperature to obtain a molded article.

Each of the thus prepared molded articles were evaluated for their various physical properties such as appearance, bending modulus, 50% compression stress, closed cell content, degree of fusion bonding and shrinkage. The results are summarized in Tables 3 and 4.

Table 3

| | | Example | 1 | 2 | 3 | 4 | 5 | 6 | 7 | 8 | 9 | 10 | 11 |
|---|---|---|---|---|---|---|---|---|---|---|---|---|---|
| Expanded Beads Molded Article | Molding Conditions | Expanded bead internal pressure (MPa(G)) | 0.05 | 0.05 | 0.05 | 0.05 | 0.05 | 0.05 | 0.05 | 0.05 | 0.05 | 0.05 | 0.07 |
| | | Vapor pressure (MPa(G)) | 0.12 | 0.08 | 0.08 | 0.12 | 0.20 | 0.12 | 0.12 | 0.16 | 0.08 | 0.08 | 0.12 |
| | Physical Properties | Density (g/L) | 84 | 84 | 84 | 84 | 84 | 84 | 84 | 84 | 84 | 84 | 42 |
| | | Shrinkage (%) | 1.7 | 1.7 | 2.0 | 1.7 | 1.7 | 1.7 | 1.7 | 1.7 | 1.6 | 1.7 | 1.8 |
| | | Fusion bonding degree (%) | 80 | 90 | 90 | 90 | 80 | 90 | 80 | 50 | 90 | 90 | 80 |
| | | Closed cell content (%) | 81 | 84 | 45 | 76 | 74 | 77 | 75 | 74 | 75 | 50 | 85 |
| | | 50% compressive stress (MPa) | 0.89 | 0.91 | 0.81 | 1.01 | 1.05 | 1.01 | 0.97 | 0.98 | 0.96 | 0.81 | 0.47 |
| | | Bending modulus (MPa) | 20 | 22 | 27 | 33 | 35 | 33 | 35 | 33 | 32 | 21 | 17 |
| | | Heat resistance; dimension change upon heating [120°C](%) | -0.4 | -0.3 | -0.5 | -0.5 | -0.3 | -0.5 | -0.4 | -0.4 | -0.3 | -0.3 | -1.0 |
| | | Appearance | good | good | good | good | fair | good | fair | good | good | good | fair |

## Table 4

| Comparative Example | | | 1 | 2 | 3 | 4 | 5 |
|---|---|---|---|---|---|---|---|
| Expanded Beads Molded Article | Molding Conditions | Expanded bead internal pressure (MPa(G)) | 0.05 | 0.05 | 0.05 | 0.05 | 0.07 |
| | | Vapor pressure (MPa(G)) | 0.08 | 0.06 | 0.08 | 0.08 | 0.08 |
| | Physical Properties | Density (g/L) | 84 | 84 | 84 | 84 | 42 |
| | | Shrinkage (%) | 1.6 | 1.8 | 1.4 | 2.0 | 1.6 |
| | | Fusion bonding degree (%) | 90 | 90 | 80 | 80 | 90 |
| | | Closed cell content (%) | 82 | 40 | 44 | 52 | 79 |
| | | 50% compressive stress (MPa) | 0.79 | 0.79 | 0.73 | 0.77 | 0.43 |
| | | Bending modulus (MPa) | 15 | 19 | 13 | 14 | 15 |
| | | Heat resistance; dimension change upon heating [120°C] (%) | -0.3 | -0.5 | -0.4 | -2.3 | -1.1 |
| | | Appearance | good | good | good | fair | good |

The internal pressure of the expanded beads and the density of the molded articles shown in Tables 3 and 4 were measured by the following methods. Expanded bead internal pressure:
The internal pressure of the expanded beads that were used for the preparation of the molded article was determined using a part of the expanded beads (hereinafter referred to as a group of expanded beads) just before feeding to the in-mold molding device as follows.

A group of expanded beads whose internal pressure had been increased in a pressurization tank and which were just before feeding to the in-mold molding device were packed, within 60 seconds after they were taken out of the pressurization tank, in a bag which was provided with a multiplicity of pin holes each having a size preventing the passage of the beads but allowing free passage of air. The beads-containing bag was transferred to a constant temperature and humidity room maintained at 23°C and 50 % relative humidity under ambient pressure. The beads-containing bag was placed on a weighing device in the room and weighed. The weight measurement was carried out 120 seconds after the expanded beads had been taken out of the pressure tank. The measured weight was Q (g). The beads-containing bag was then allowed to stand for 10 days in the same room. The pressurized air in the expanded beads gradually permeated through the cell walls and escaped from the beads. Therefore, the weight of the beads decreased with the lapse of time. However, an equilibrium had been established and the weight had been stabilized after lapse of the 10 days period. Thus, the weight of the bag containing the expanded beads U (g) was measured again in the same room after the lapse of the 10 days period to give a value of U (g). The difference between Q (g) and U (g) was an amount of air increased W (g), from which the internal pressure P (MPa) of the expanded beads was calculated according to the formula (5) shown below. The internal pressure P represents a gauge pressure.

$$P = (W/M) \times R \times T/V \qquad (5)$$

In the above formula, M is the molecular weight of air (here, a constant of 28.8 (g/mol) is used), R is the gas constant (here a constant of 0.0083 (MPa·L/(K·mol)) is used), T represents an absolute temperature (and is 296K because 23°C is used), and V represents a volume (L) obtained by subtracting the volume of the PLA resin of the group of the beads from the apparent volume of the group of the expanded beads.

The apparent volume (L) of the group of the expanded beads is measured by immersing the entire expanded beads, which have been taken out of the bag after the lapse of the 10 days period, in water at 23°C contained in a measuring cylinder in the same room. From the rise of the water level, the volume Y (cm³) is determined and converted to a volume in terms of (L). The volume (L) of the PLA resin in the group of the expanded beads is obtained by dividing the weight of the group of the expanded beads (the difference between U (g) and the weight Z (g) of the bag having a multiplicity of pin holes) by the density (g/cm³) of the resin obtained by defoaming the expanded beads using a heat press, followed by unit conversion. In the above measurement, a plural numbers of the expanded beads are used so that the weight of the group of the expanded beads (difference between U (g) and Z (g)) is within the range of 0.5000 to 10.0000 g and the volume Y is within the range of 50 to 90 cm³.

In the present specification, the internal pressure of expanded beads which are to be subjected to two stage expansion is also measured in the same manner as described above.

Density of molded article:

The density of the molded article was measured as follows. The molded article was allowed to stand at a temperature of 23°C under a relative humidity of 50% for 24 hours and measured for its outer dimension to determine the bulk volume thereof. The molded article was then weighed precisely. The weight (g) of the molded article was divided by the bulk volume and the unit was converted to determine the bulk density (g/L) thereof.

Methods for evaluating physical properties of the molded articles are as follows.

Appearance:

Appearance was evaluated by observation of a surface of a molded article with naked eyes and rated as follows:

Good: Almost no spaces between beads are observed in the surface of the molded article and the surface state is good.
Fair: Spaces between beads are observed, although not significantly, in the surface of the molded article.
Poor: Spaces between beads are significantly observed in the surface of the molded article.

Degree of fusion bonding:

A degree of fusion bonding is evaluated in terms of a proportion (percentage) of the number of expanded beads that underwent material failure based on the number of expanded beads that were exposed on a ruptured cross section obtained by rupturing a molded article. More specifically, a test piece having a length 50 mm, a width of 50 mm and a thickness 50 mm was cut out from each of the molded articles. A cut with a depth of about 5 mm was then formed on each test piece with a cutter knife. Each test piece was then ruptured along the cut line. The ruptured cross section was observed to count a number (n) of the expanded beads present on the cross section and a number (b) of the expanded beads which underwent material failure. The ratio (b/n) in terms of percentage of (b) based on (n) represents the fusion bonding degree (%).

Shrinkage:

Change in dimension in the widthwise direction of the molded article after aging relative to the dimension in the widthwise direction of the mold used for molding the flat plate was calculated by the following formula:

$$\text{Shrinkage (\%)} = (1 - (\text{minimum dimension (mm) in the widthwise direction}$$
$$\text{of the molded article after aging}) / 250 \text{ (mm)}) \times 100$$

50% Compression stress:

A test piece (without skin) having a length of 50 mm, a width of 50 mm and a thickness of 25 mm was cut out from a molded article and was subjected to a compression test in which the test piece was compressed in the thickness direction at a compression rate of 10 mm/min according to JIS K6767 (1999) to determine 50% compression stress of the molded article.

Bending modulus:

A test piece (without skin) having a length of 120 mm, a width of 25 mm and a thickness of 20 mm was cut out from a molded article and was subjected to a bending test in which the test piece was bent at a rate of 10 mm/min according to JIS K7221-1 (1999) to determine bending modulus of the molded article.

Dimension change upon heating:

The molded articles were each evaluated for their heat resistance in terms of dimension change upon heating. In accordance with JIS K6767 (1999), "thermal stability (Dimensional Stability at High Temperatures", method B)", a test piece was heated for 22 hours in a gear oven maintained at 120°C. Thereafter, the test piece was taken out of the oven and allowed to stand for 1 hour in a constant temperature and humidity room maintained at 23°C and 50 % relative humidity. From the dimensions before and after the heating, a change in dimension upon heating is calculated according to the following formula:

$$\text{Dimension change upon heating (\%)} = ((\text{[Dimension after heating]} - \text{[Dimension before heating]})/\text{[Dimension before heating]}) \times 100$$

From the comparison between Examples and Comparative Examples, it is seen that the expanded beads obtained in Examples are free of or almost free of shrinkage and that the molded articles obtained from the expanded beads of Examples have excellent mechanical properties (bending modulus and compressive strength).

## Claims

1. A process for producing polylactic acid-based resin expanded beads, comprising a step of impregnating resin particles, dispersed in an aqueous dispersing medium in a closed vessel, with a physical blowing agent to obtain foamable particles, and a step of releasing the foamable particles, which are in a softened state, to an atmosphere having a pressure lower than that in the closed vessel together with the dispersing medium to foam and expand the foamable particles, wherein the resin particles are epoxide-modified polylactic acid-based resin particles that satisfy the following formulas (1) and (2):

$$20 \text{ mN} \leq MT \leq 200 \text{ mN} \qquad (1)$$

$$\log MT \geq 0.93 \log \eta - 1.90 \qquad (2)$$

wherein MT represents a melt tension [mN] of the epoxide-modified polylactic acid-based resin particles at 190°C, $\eta$ represents a melt viscosity [Pa·s] of the epoxide-modified polylactic acid-based resin particles at 190°C and a shear speed of 20 sec$^{-1}$.

2. The process for producing polylactic acid-based resin expanded beads according to claim 1, wherein the epoxide is an epoxy group-containing acrylic-based polymer having an epoxy value of 1.2 to 2.4 meq/g and a weight average molecular weight of $8.0 \times 10^3$ to $1.5 \times 10^4$.

## Patentansprüche

1. Verfahren zur Herstellung von auf Polymilchsäure basierenden Harzexpandierten Kügelchen, umfassend einen Schritt des Imprägnierens von Harzpartikeln, dispergiert in einem wässrigen Dispergiermittel in einem geschlossenen Gefäß, mit einem physikalischen Treibmittel, um schäumbare Teilchen zu erhalten, und einen Schritt des Freigebens der schäumbaren Teilchen, die in einem erweichten Zustand vorliegen, in eine Atmosphäre mit einem niedrigeren Druck als der in dem geschlossenen Behälter zusammen mit dem Dispergiermedium, um die schäumbaren Partikel zu schäumen und zu expandieren, wobei die Harzpartikel Epoxidmodifizierte Polymilchsäurebasierte Harzpartikel sind, die den folgenden Formeln (1) und (2) genügen

$$20 \text{ mN} \leq MT \leq 200 \text{ mN} \tag{1}$$

$$\log MT \geq 0.93 \log \eta - 1.90 \tag{2}$$

wobei MT eine Schmelzspannung [mN] der Epoxidmodifizierten Polymilchsäure-basierten Harzpartikel bei 190°C darstellt, $\eta$ eine Schmelzviskosität [Pa · s] der Epoxidharz-modifizierten Polymilchsäure-basierten Harzpartikel bei 190°C und einer Schergeschwindigkeit von 20 sec$^{-1}$ darstellt.

2. Verfahren zur Herstellung von auf Polymilchsäure basierenden Harzexpandierten Kügelchen gemäß Anspruch 1, wobei das Epoxid ein Epoxidgruppenhaltiges Polymer auf Acrylbasis mit einem Epoxidwert von 1,2 bis 2,4 meq/g und einem Gewichtsmittleren Molekulargewicht von 8,0x10$^3$ bis 1,5x10$^4$ ist.

## Revendications

1. Procédé de production de billes dilatées en résine à base d'un polyacide lactique, comprenant une étape d'imprégnation de particules de résine, dispersées dans un milieu aqueux de dispersion dans un récipient fermé, avec un agent gonflant physique pour obtenir des particules moussables, et une étape de libération des particules moussables, qui sont dans un état ramolli, dans une atmosphère ayant une pression inférieure à celle dans le récipient fermé conjointement avec le milieu de dispersion pour mousser et dilater les particules expansibles, dans lequel les particules de résine sont des particules en résine à base d'un polyacide lactique à modification époxyde qui satisfont les formules (1) et (2) suivantes :

$$20 \text{ mN} \leq MT \leq 200 \text{ mN} \tag{1}$$

$$\log MT \geq 0,93 \log \eta - 1,90 \tag{2}$$

dans lesquelles MT représente une tension de fusion [mN] des particules en résine à base d'un polyacide lactique à modification époxyde à 190 °C, $\eta$ représente une viscosité à l'état fondu [Pa.s] des particules en résine à base d'un polyacide lactique à modification époxyde à 190 °C et une vitesse de cisaillement de 20 sec$^{-1}$.

2. Procédé de production de billes dilatées en résine à base d'un polyacide lactique selon la revendication 1, dans lequel l'époxyde est un polymère acrylique contenant un groupe époxy présentant un indice d'époxy de 1,2 à 2,4 méq/g et un poids moléculaire moyen en poids de 8,0 x 10$^3$ à 1,5 x 10$^4$.

FIG. 1

FIG. 2

FIG. 3

FIG. 4

FIG. 5

## FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000136261 A
- JP 2004083890 A
- JP 2006282750 A
- JP 2006282753 A
- JP 2009062502 A
- JP 2007100025 A
- WO 2008123367 A
- JP 2007169394 A
- JP 2009079202 A
- JP 2007246610 A
- JP 2003064213 A
- US 5310865 A
- US 2758987 A
- US 4057537 A
- US 5428126 A
- EP 0712880A2 A
- JP S4116125 B
- JP S4323858 B
- JP S4429522 B
- JP S60185816 A
- JP S4638359 B
- JP S5122951 B
- JP H0446217 B
- JP H0622919 B
- JP H0649795 B
- JP H09104026 A
- JP H09104027 A
- JP H10180888 A